# EUROPEAN PATENT APPLICATION

(11) **EP 2 573 091 A1**
(43) Date of publication of application: **27.03.2013**
(21) Application number: 11182524.6
(22) Date of filing: 23.09.2011
(51) Int. Cl.: C07F 7/08, C07F 17/00, C08F 4/6592

(54) **PROCESS FOR RECYCLING OF FREE LIGAND FROM THEIR CORRESPONDING METALLOCENE COMPLEXES**

(71) Applicant: Lummus Novolen Technology GmbH, 68165 Mannheim (DE)
(72) Inventor: Nogai, Stefan, 69120 Heidelberg (DE); Winter, Andreas, 67271 Neuleiningen (DE)
(74) Representative: Giovannini, Francesca

(57) **Abstract**

An efficient and economical process to recover ligands from metallocene complexes, where the free ligand recovered may be recycled to produce additional metallocene and metallocene complexes. The process comprises contacting a metallocene complex comprising a ligand with a protic composition under reaction conditions to decompose the metallocene complex and form a reaction product comprising free ligand and inorganic decomposition products; and recovering the free ligand from the reaction product

## Description

### FIELD OF THE DISCLOSURE

Embodiments disclosed herein relate generally to a process for recovery of ligands from metallocene complexes. More specifically, embodiments disclosed herein relate to an efficient and economical process to recover ligands from metallocene complexes, where the free ligand recovered may be recycled to produce additional metallocene.

### BACKGROUND

Conventional synthesis of ansa-metallocene complexes typically leads to the formation of diastereomers of these complexes. Unfortunately, for most complexes, only one of the diastereomers is useful for the production of polypropylene having desirable properties, such as isotacticity. As the other diastereomer may have an adverse effect on the polymerization process or the resulting polymer, the unwanted metallocene complex is typically separated from the desired metallocene complex and discarded. In some cases, 50% or more of the total metallocene yield may be lost in this manner.

As described in EP1392710B1, synthesis of a metallocene may involve multiple steps, including reaction of a metal compound, such as a metal alkoxide or metal halide, with a cyclopentadienyl-metal compound. This reaction may result in the formation of considerable amounts of inorganic byproducts (salts) which are mixed with the ansa-metallocene, which itself is a mixture of diastereomers. The desired metallocene is then separated from the inorganic byproducts and organic byproducts (including the unwanted diastereomer), in a multi-step process. Similar methods for producing a desired metallocene product are also mentioned in EP1963339B1 and US5770752.

These references also describe possible methods for recovering unreacted ligand and/or recovering ligand from the meso form of the metallocene. However, the methods described are either non-descript, such as in EP1392710B1, which merely indicates decomposing the meso form of the metallocene, or require harsh conditions and/or extensive purification of the decomposition products via resource extensive chromatographic methods, such as in EP1963339B1.

### SUMMARY OF THE CLAIMED EMBODIMENTS

Embodiments disclosed herein may provide an efficient and economical process to recover ligands from metallocene complexes, where the free ligand may be recovered in high yield from the unwanted diastereomer for recycle to produce additional metallocene. The process involves the controlled decomposition of metallocene complexes with the help of a protic substance, separating the inorganic decomposition products and other impurities, and recovering the ligand for recycle and reuse.

In one aspect, embodiments disclosed herein relate to a process for recovering a ligand from a metallocene complex, the process including: contacting a metallocene complex comprising a ligand with a composition comprising a protic compound under reaction conditions to decompose the metallocene complex and form a reaction product comprising free ligand and inorganic decomposition products; recovering the free ligand from the reaction product.

In another aspect, embodiments disclosed herein relate to a process for producing a metallocene catalyst, the process including: synthesizing an ansa-metallocene complex comprising a mixture of the racemic form of the metallocene complex and the meso form of the metallocene complex, the synthesizing including reaction of a ligand with a metal compound; separating the ansa-metallocene complex to recover a fraction comprising the meso form of the metallocene complex and a fraction comprising the racemic form of the metallocene complex; contacting at least a portion of the fraction comprising the meso form of the metallocene complex with a composition comprising a protic compound under reaction conditions to decompose the metallocene complex and form a reaction product comprising free ligand and inorganic decomposition products; recovering the free ligand from the reaction product; and recycling at least a portion of the free ligand to the synthesizing step.

Other aspects and advantages will be apparent from the following description and the appended claims.

### BRIEF DESCRIPTION OF DRAWINGS

Figure 1 is a simplified block flow diagram of a process for recovering ligands from metallocene complexes according to embodiments disclosed herein.

Figure 2 is a simplified block flow diagram of a process for efficiently and economically producing metallocene complexes according to embodiments disclosed herein.

### DETAILED DESCRIPTION

In one aspect, embodiments herein relate - generally to a process for recovery of ligands from metallocene complexes. More specifically, embodiments disclosed herein relate to an efficient and economical process to recover ligands from metallocene complexes, where the free ligand may be recovered in high yield from the unwanted diastereomer for recycle to produce additional metallocene. The process involves, among other possible steps, the controlled decomposition of metallocene complexes with the help of a protic composition, separating the inorganic decomposition products and other impurities, and recovering the ligand for recycle and reuse. The reaction referred to as controlled decomposition or decomposition reaction in the context of this invention exploits the general principle, that the carbon-metal bonds in many organometallic compounds such as metallocene complexes may be cleaved in the presence of a protic substance being able to transfer a proton to the organic part of the organometallic compound and hence regenerating the original orgnanic molecule from which the organic part of the organometallic compound was originally generated. In equation 1 a schematic representation for the decomposition of the meso form of a metallocene complex with a protic substance H-X as defined below is shown. The rac form of the metallocene complex or a mixture of rac and meso form will react likewise. The free ligand is recovered and the metal containing by-products, represented by the general formula "X₂M¹R¹R²", are separated. The exact chemical nature of the by-products is neither known nor relevant for the present invention and the existence of a mixture of different species is possible.

The groups M¹, R¹, R², R³, R⁴, R⁵, R⁶, R⁷, R⁸, R⁹, R^{3'}, R^{4'}, R^{5'}, R^{6'}, R^{7'} and R^{8'} are identical to those described in but not limited to U.S. Patents Nos. 7,285,608; 7,169,864; 7,842,764; EP 1 692 144; WO 09/054832 and WO 10/077230 which are herewith incorporated by reference.

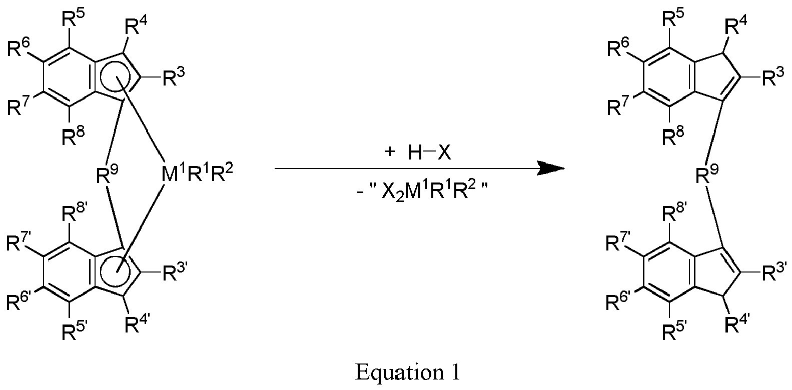

The reaction of a metallocene complex with a protic substance may lead to the formation of different isomers of the ligand. Examples for possible isomers of the ligand formed during the decomposition reaction are shown in formulas 1 (a) to (c). Anyone of the isomers formed or a mixture thereof can be used to produce the original metallocene complex in its rac or meso form.

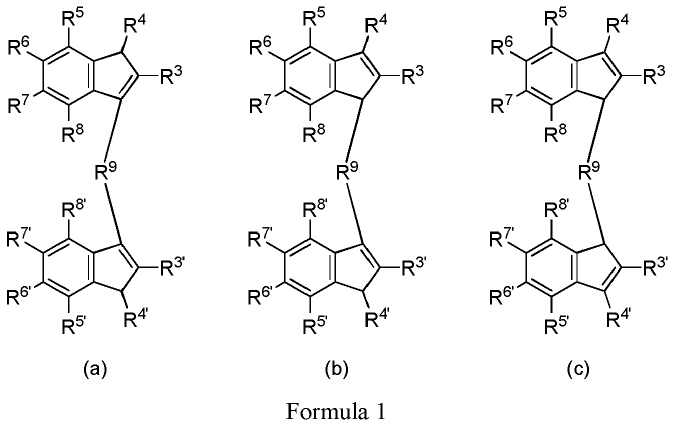

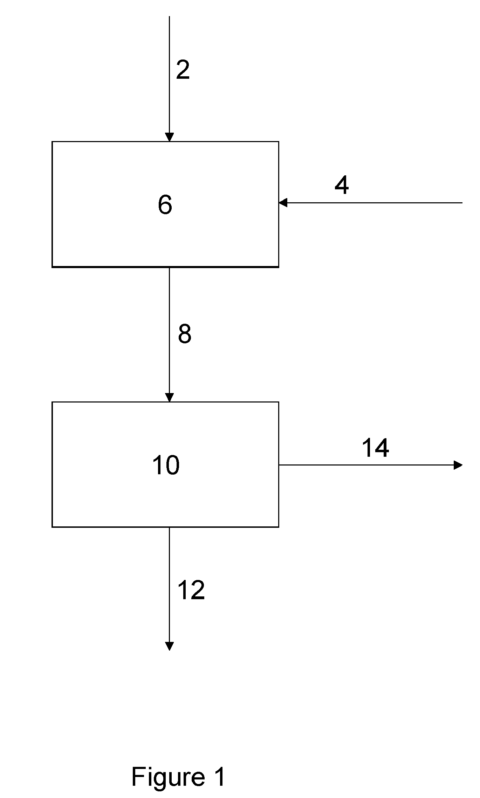

Referring now to Figure 1, a simplified block flow diagram of a process for recovering ligands from metallocene complexes according to embodiments disclosed herein is illustrated. A metallocene complex 2 comprising a ligand is contacted with a protic composition 4, which includes a protic substance, in a decomposition stage 6. The contacting of the metallocene complex 2 and the protic composition 4 is performed at conditions sufficient to decompose at least a portion of the metallocene complex, forming a reaction product 8 comprising free ligand and inorganic decomposition products. The reaction product 8 then undergoes a separation/recovery stage 10, where the free ligand 12 is separated from the inorganic decomposition products 14.

While the process of Figure 1 illustrates the process as a simplified block flow diagram, it is noted that the decomposition and separation / recovery stages 6, 10 may be performed in the same or separate vessels. Further, the decomposition and separation / recovery stages 6, 10 illustrated may include one or more internal steps for resulting in the desired products, examples of which will be described in more detail below.

Protic Composition

The protic composition may be a homophasic mixture of one or more protic substances in some embodiments. In other embodiments, the protic composition may be a homophasic mixture of one or more protic substances and one or more aprotic substances. In yet other embodiments, the protic composition may be a multiphasic system containing one or more protic substances and one or more aprotic substances. In some preferred embodiments, the protic composition includes an inert aprotic substance, such as toluene, and a protic substance, such as ethanol, where the aprotic and protic compounds may be selected based on both the desired decomposition reaction and to facilitate isolation and recovery of the ligand.

Protic Substance

Protic substances useful in embodiments disclosed herein may include water, a mineral acid, an organic acid, an alcohol, an ammonium salt containing at least one nitrogen-bound hydrogen atom, a sulfonic acid, a sulfinic acid, a thiol, an organic derivative of oxoacids of phosphorous, and combinations thereof.

Examples of mineral acids useful as protic substances in embodiments disclosed herein may include hydrochloric acid, nitric acid, phosphoric acid, boric acid, hydrofluoric acid, and hydrobromic acid, among others. Examples of organic acids useful as protic substances in embodiments disclosed herein may include acetic acid, formic acid, citric acid, oxalic acid, tartaric acid, propionic acid, butyric acid, isobutyric acid, pentanoic acid, isobutyric acid, hexanoic acid, 4-methylvaleric acid, heptanoic acid, oleic acid, lactic acid, benzoic acid, succinic acid, and stearic acid, among others.

Examples of alcohols useful as protic substances in embodiments disclosed herein may include methanol, ethanol, propanol, isopropanol, n-butanol, isobutanol, and t-butanol, as well as the various isomers of higher alcohols. Examples of ammonium salts containing at least one nitrogen-bound hydrogen atom useful as protic substances in embodiments disclosed herein may include ammonium carbonate, ammonium chloride, ammonium acetate, ammonium carbamate, ammonium formate, ammonium thiosulfate, and ammonium nitrate, among others.

Sulfonic acids useful as protic substances in embodiments disclosed herein may include various compounds having the general formula RS(=O)₂OH, where R is an alkyl or aryl group. Examples of sulfonic acids useful in embodiments disclosed herein may include alkylbenzenesulfonic acids, such as p-toluene sulfonic acid and dodecylbenzene sulfonic acid, ethanesulfonic acid, and methanesulfonic acid, among others. Sulfinic acids useful as protic substances in embodiments disclosed herein may include various oxoacids of sulfur having the general formula RSO(OH), where R is an alkyl or aryl group. Salts of sulfonic acids and sulfinic acids may also be used.

Combinations of two or more of the protic substances described above may also be used. The preferred protic compounds or combination of protic compounds used for decomposition of the metallocene complex may depend upon the particular metallocene complex and/or the subsequent steps used to recover the ligand.

Aprotic Substance

Aprotic substances useful in embodiments disclosed herein may include linear hydrocarbons, branched hydrocarbons, cyclic hydrocarbons, and aromatic hydrocarbons, or combinations thereof. Examples of aprotic substances may include propane, butane, isobutane, pentane, 2-methylbutane, neopentane, cyclopentane, hexane, 2-methylpentane, 3-methylpentane, heptane, 2-methylhexane, 3-methylhexane, cyclohexane, octane, isooctane, nonane, isononane, decane, benzene, toluene, and xylene, among others. In some embodiments, the aprotic substance may include toluene, methylene chloride, or a combination thereof.

Decomposition of the Metallocene Complex

Decomposition of the metallocene complex may be performed by contacting the metallocene complex with a protic composition, as described above. The reaction conditions suitable for the desired decomposition of the metallocene complex into the corresponding ligand and a metal compound may depend upon the stability of the metallocene complex, the stability of the ligand itself, the solubility of the metallocene complex in organic or inorganic solvents, the solubility of the ligand in organic or inorganic solvents, the particular protic substance(s) used and factors affecting the economy of the process among other factors.

Contact of the metallocene complex with the composition comprising a protic compound may be conducted with the metallocene complex in the solid phase, such as in a suspension, or with the metallocene complex partially or wholly dissolved in the protic composition. In some embodiments, contact of the metallocene complex may be initiated where the metallocene is in the solid phase, and heating to decomposition reaction temperature may result in the dissolution of the metallocene complex.

The decomposition reaction often may already occur at or below ambient temperatures but under these conditions, depending on the exact nature of the metallocene, reaction times in excess of 10 or even 24 hours may be required. To ensure that the reaction between the metallocene complex and the protic substance occurs at an economic rate, i.e. below 24 hours or preferred below 10 hours or even more preferred below 5 h, the reaction may be carried out at elevated temperatures. Often the boiling points of the mixtures of solvent and/or the protic substance used set a natural limit for the maximum temperature of the decomposition reaction. However reasonably fast reaction rates may already be achieved at temperatures below the boiling point of the decomposition mixture.

Economic reactions between the protic substance and the metallocene complex may be performed at temperatures in the range from about 0°C to about 200°C, for example. In some embodiments reaction temperatures may be in the range from about 20°C to about 160°C and in the range from about 50°C to about 120°C in other embodiments.

The decomposition reactions may be performed under slight vacuum, at atmospheric pressure, or at elevated pressures. In some embodiments, the admixture of the metallocene complex and the protic composition may be maintained at a boiling point of the mixture, preferably under reflux. Reaction of the metallocene complex with the protic substance may be performed over a time period in the range from about 1 minute to about 24 hours, such as in the range from about 2 hours to about 12 hours.

As noted above, the protic composition may be a homophasic or multiphasic composition. Further, the metallocene complex may initially be dissolved or suspended in an aprotic solvent, such as toluene, for example. Sufficient agitation or stirring may be necessary to obtain the desired contact of the protic composition with the metallocene complex for the decomposition reaction.

In some embodiments, decomposition of a metallocene complex is performed: A) where the protic composition includes a) an aprotic substance, such as toluene, in which the metallocene complex may be dissolved at room temperature or slightly elevated temperatures (e.g., < 100°C), and b) an alcohol or a mixture including one or more alcohols as the protic substance; and B) at a boiling point of the mixture, under reflux.

Separation / Recovery of the Ligand

Following the decomposition of the metallocene complex, the resulting reaction product may include the ligand, a metal compound, such as a metal salt, and various reaction byproducts, depending upon reaction conditions, protic compositions, and the metallocene complex that are used. In some embodiments, reaction byproducts are not present. The free ligand may then be recovered from the decomposition reaction product.

Separation and recovery of the ligand may be performed using various techniques, and may include one or more of phase separation, such as where a multiphasic protic composition is used, precipitation, crystallization, fractional crystallization, filtration, solvent removal (distillation), washing, and recrystallization to increase the purity of the ligand recovered, if desired.

For example, in an embodiments where a homophasic protic composition including an aprotic solvent is used, the decomposition reaction product may be mixed with an alcohol, which may be the same or different than the protic substance used for performing the decomposition reaction. In sufficient quantity, the added alcohol may act as an antisolvent, resulting in precipitation of the ligand. In other embodiments, the composition may be boiled to remove a portion of the aprotic solvent, thus concentrating the ligand in the added alcohol and resulting in precipitation of the ligand. The precipitated ligand may then be recovered by filtration, for example.

As another example, in an embodiment where a multiphasic protic composition is used, the organic phase including the free ligand may be separated from the remaining portions. Following phase separation, the organic phase may be extracted with a solvent, and dried to remove water, if present. The solvent may then be removed from the composition, such as by use of vacuum, resulting in a crude solid product containing the free ligand.

Decomposition of the metallocene complex and separation and recovery of the free ligand, as described above, may result in recovery of a crude ligand product having a purity of greater than 75% in some embodiments; greater than 85% in other embodiments and greater than 90% in other embodiments. Impurities in this first product may consist of Zirconium containing fragments of the complex, fragments of the ligand formed via side reactions during the decomposition reaction or other compounds. This crude ligand product may be recycled without further purification for the production of additional metallocene product. In other embodiments, the crude ligand product may be purified via recrystallization, chromatography, extraction or other standard methods for the purification of chemical compounds, to increase the purity of the ligand to greater than 95%, for example. As used herein, "crude ligand product" refers to the ligand isolated from the reaction/workup sequence without further purification (e.g., recrystallization). The purity of this first product is generally sufficient to use it as it is for the synthesis of new metallocene.

An economic process for the purification of metallocene ligands as described in the present invention is the recrystallization from hot alcohols. Other purification processes are well known to those of ordinary skill in the art.

Following recovery, at least a portion of the free ligand may be fed to a process for the production of a metallocene complex. For example, the ligand recovered may be from a meso form of a metallocene complex, and the process for the production of a metallocene complex may be for the production of an ansa-metallocene complex comprising a mixture of the meso and racemic forms of the metallocene complex. Because different metals, bridging agents, and other components may be varied, the free ligand may be recovered from the same or different metallocene complex than the metallocene complex being produced in the process to which the free ligand is recovered.

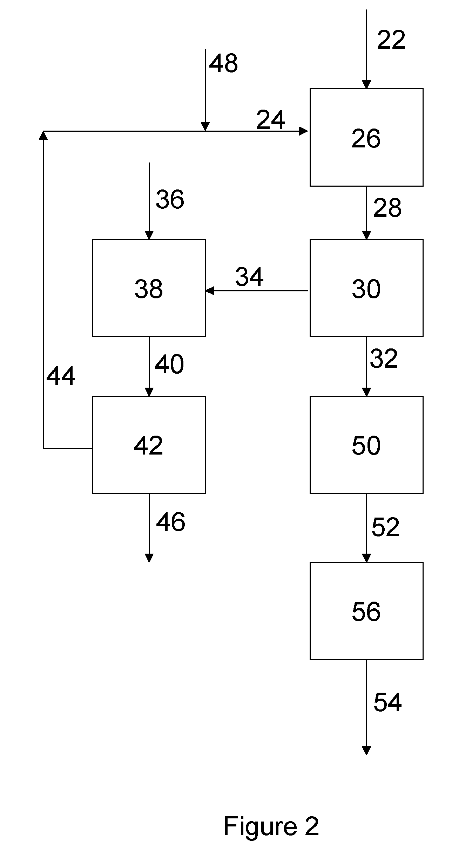

Referring now to Figure 2, a simplified block flow diagram of a process for efficiently and economically producing metallocene complexes according to embodiments disclosed herein is illustrated, including recovery of ligands from unwanted forms of the metallocene complexes. Again, while illustrated as a simplified block flow diagram, the various stages may be performed in one or more vessels and may include one or more internal steps not illustrated.

In the process for producing a metallocene complex, a metal compound 22, such as a metal alkoxide or metal halide, may be reacted with a ligand 24, such as a cyclopentadienyl-metal compound, in metallocene synthesis stage 26. Synthesis of the metallocene complex may result in production of a product 28 including an ansa-metallocene complex, having a bound ligand, which may be a mixture of the racemic form of the metallocene complex and the meso form of the metallocene complex.

The product 28 may then be fed to a separation stage 30 for separation of the ansa-metallocene complex into one or more fractions including the desired form of the metallocene and the undesired form of the metallocene. In some embodiments, the desired form of the metallocene may be the racemic form and the undesired form of the metallocene may be the meso form. Separation stage 30 may also include one or more steps for separating reaction byproducts and impurities from the metallocene complex. Following separation, a fraction 32 comprising the desired form of the metallocene complex and a fraction 34 comprising the undesired form of the metallocene complex may be recovered.

The fraction(s) 34 including the undesired form of the metallocene complex are then contacted with a composition 36 comprising a protic substance in a decomposition stage 38. The contacting of the metallocene complex 34 and the composition 36 comprising a protic substance is performed at conditions sufficient to decompose at least a portion of the metallocene complex, forming a reaction product 40 comprising free ligand and inorganic decomposition products. The reaction product 40 then undergoes a separation/recovery stage 42, where a fraction 44 comprising the free ligand is separated from the inorganic decomposition products 46.

The free ligand 44 recovered may then be recycled to metallocene synthesis step 26. If desired, the fraction 44 comprising the free ligand may be treated to increase the purity of the ligand before recycle. For example, the crude ligand recovered may be dissolved in and recrystallized from hot alcohols, such as ethanol or isopropanol, to achieve a ligand product of 95% purity or greater. In some embodiments, the free ligand 44 recovered may be combined with fresh ligand 48 to form combined ligand feed 24.

The fraction(s) 32 including the desired metallocene may then be processed to form a desired metallocene catalyst system in stage 50. Stage 50 may include any number of steps commonly used to form a metallocene catalyst system, such as supporting the metallocene on a support structure, activating the metallocene catalyst, and/or contacting the metallocene or the supported metallocene with a co-catalyst, among other steps. Such activation and contacting steps may be performed in a vessel, in a flow conduit, or in a polymerization reactor, as may be appropriate or preferred. The metallocene catalyst system 52, appropriately activated, may then be used to form a polymerization product 54, such as polyethylene, polypropylene, or other various polymers, in a polymerization reaction stage 56.

Metallocene Synthesis

Synthesis of metallocene complexes using ligand recovered and recycled according to embodiments disclosed herein may be performed using typical metallocene synthesis processes, incorporating the recycle of ligand as illustrated in Figure 2. The synthesis of metallocene complexes is well known in itself (U.S. Pat. No. 4,752,597; U.S. Pat. No. 5,017,714; EP-A-320,762; EP-A-416,815; EP-A-537,686; EP-A-669,340; H. H. Brintzinger et al.; Angew. Chem., 107 (1995), 1255; H. H. Brintzinger et al.; J. Organomet. Chem., 232 (1982), 233). They may be produced, for example, by reacting cyclopentadienyl metal compounds with halides of transition metals, such as titanium, zirconium, and hafnium.

It is also well known that basic properties of the metallocenes, such as polymerization activity, stereoselectivity, regioselectivity, and maximum achievable polymer molecular weight can be systematically controlled by specific substitution patterns of the ligand sphere. For example, the molecular weight M_{w} of the polypropylene produced with the use of dimethylsilylbis(2-R-indenyl) zirconium dichlorides is described with the typical values for PP waxes of 37,500 g/mole (R=H) to 197,500 g/mole (R=methyl) (EP 0 485 822 B1, U.S. Pat. No. 5,243,001).

With respect to controlling stereoselectivity, regioselectivity, and polymer molecular weight, the substitution of an indenyl ligand in the 4-position has also been found to be effective. For example, EP 0 576 970 (U.S. Pat. No. 5,770,753) comparatively describes the metallocenes dimethylsilylbis(2-ethyl-1-indenyl) zirconium dichloride (polymer molecular weight of 450,000 g/mole and polymer melting point of 147.degree. C. as measures of the stereo- and regioselectivity) and dimethylsilylbis(2-ethyl-4-phenyl-1-indenyl) zirconium dichloride (polymer molecular weight of 1,790,000 g/mole and polymer melting point of 162°C).

The controlling effect of units that bridge the indenyl ligands has also been described. For example, EP 0 284 708 B1 (U.S. Pat. No. 6,117,957) describes a method for controlling polymer molecular weight and polymer melting point by bridge variation ("It has been discovered that changing the structure and composition of the bridge leads to changes in the melting points and molecular weights of the polymer products. ") Similar results were reported in EP 0 336 128 B1 (U.S. Pat. No. 5,679,812) and EP 0 344 887 (U.S. Pat. No. 5,017,714).

The metallocenes with standard bridges, such as the dimethylsilyl bridge, which have been described in the literature and in some cases are already being used in industry, generally have tremendous disadvantages. For example, metallocenes bridged in this way can be isolated in pure racemic ("rac") form only with unacceptably high yield losses and high expense of by-products, and the support-production step necessary for the use of metallocenes in all modern polymerization processes for preventing incrustation is made even more complicated by the unsatisfactory solubility behavior of these compounds. Processes according to embodiments disclosed herein may alleviate some of these disadvantages, improving yield of desired catalyst on a fresh ligand basis and decreasing the expense of the metallocene synthesis process.

Ligands and Metallocene Complexes

Processes for the separation and recovery of ligands according to embodiments disclosed herein may thus be useful for improving the economics for the production of metallocenes, including those described in one or more of U.S. Patent Nos. 7,285,608, 7,232,869, 7,169,864, 4,530,914; 4,542,199; 4,752,597; 4,769,910; 4,808,561; 4,871,705; 4,931,417; 4,933,403; 4,937,299; 5,017,714; 5,026,798; 5,057,475; 5,120,867; 5,132,381; 5,145,819; 5,155,180; 5,198,401; 5,239,022; 5,243,001; 5,276,208; 5,278,119; 5,296,434; 5,304,614; 5,324,800; 5,328,969; 5,329,033; 5,350,723; 5,374,752; 5,391,790; 5,416,178; 5,436,305; 5,455,366; 5,510,502; 5,532,396; 5,543,373; 5,554,704; 5,576,260; 5,612,428; 5,616,663; 5,616,747; 5,629,254; 5,635,437; 5,661,096; 5,672,668; 5,679,812; 5,723,640; 5,739,366; 5,741,868; 5,770,753; 5,786,432; 5,830,821; 5,840,644; 5,840,948; 5,852,142; 5,929,264; 5,932,669; 6,017,841; 6,051,522; 6,051,727; 6,057,408; 6,087,291; 6,100,214; 6,114,479; 6,117,955; 6,124,230; 6,140,432; 6,194,341; 6,218,558; 6,228,795; 6,242,544; 6,245,706; 6,252,097; 6,255,506; 6,255,515; 6,376,407; 6,376,408; 6,376,409; 6,376,410; 6,376,411; 6,376,412; 6,376,413; 6,376,627; 6,380,120; 6,380,121; 6,380,122; 6,380,123; 6,380,124; 6,380,330; 6,380,331; 6,380,334; 6,399,723; 6,444,606; 6,469,114 and U.S. Application Publication Nos. 2001021755; 20030149199; EP 576 970; EP 611 773, EP 320 762; EP 0 416 815; EP 0 537 686; EP 0 669 340; WO 97/32906; WO 98/22486; WO 00/12565; WO 01/48034; WO 03/045964; WO 03/106470, WO 09/054832; WO 10/077230 among others. The synthesis of the metallocene complexes described in these publications and others can be carried out by methods known per se.

For example, ligands may be recovered from the unwanted diastereomer of the metallocene compounds described in (but not limited to) U.S. Patents Nos. 7,285,608; 7,169,864; 7,842,764; EP 1 692 144; WO 09/054832 and WO 10/077230 (which are incorporated by reference). As the chemical reaction exploited to cleave the metallocene complexes and regenerate the organic ligand of the metallocene complexes relies on the inherent sensitivity of many organometallic compounds, including metallocene complexes, towards protic substances, it is believed, that the scope of the present invention can be generalized to virtually any metallocene structure and not only to the examples mentioned in the above references.

Non-limiting examples for the particularly preferred metallocene compounds of the present invention are as follows:
A-(2-isopropyl-4-(p-isopropyl-phenyl)indenyl)(2-methyl-4-(p-isopropylphenyl)indenyl)zirconiumdichloride,
A-(2-isopropyl-4-(p-tert. butyl-phenyl)indenyl)(2-methyl-4-(p-tert. butylphenyl)indenyl)zirconiumdichloride,
A-(2-isopropyl-4-(p-tert. butyl-phenyl)indenyl)(2,7-dimethyl-4-(p-tert. butylphenyl)indenyl)zirconiumdichloride,
A-(2-isopropyl-4-(p-tert. butyl-phenyl)indenyl)(2,5,6,7-tetramethyl-4-(p-tert. butylphenyl)indenyl)zirconiumdichloride,
A-(2-isopropyl-6-methyl-4-(p-tert. butyl-phenyl)indenyl)(2,6-dimethyl-4-(p-tert. butylphenyl)indenyl)zirconiumdichloride,
A-(2-isopropyl-4-(p-sec. butyl-phenyl)indenyl)(2-methyl-4-(p-sec. butylphenyl)indenyl)zirconiumdichloride,
A-(2-isopropyl-4-(p-cyclohexyl-phenyl)indenyl)(2-methyl-4-(p-cyclohexylphenyl)indenyl)zirconiumdichloride,
A-(2-isopropyl-4-(p-trimethylsilyl-phenyl)indenyl)(2-methyl-4-(p-trimethylsilyl-phenyl)indenyl)zirconiumdichloride,
A-(2-isopropyl-4-(p-adamantyl-phenyl)indenyl)(2-methyl-4-(p-adamantyl-phenyl)indenyl)zirconiumdichloride,
A-(2-isopropyl-4-(p-tris(trifluoromethyl)methyl-phenyl)indenyl)(2-methyl-4-(p-tris(trifluoromethyl)methyl-phenyl)indenyl)zirconiumdichloride,
A-(2-isopropyl-4-phenyl-indenyl)(2-methyl-4-(p-tert. butylphenyl)indenyl)zirconiumdichloride,
A-(2-isopropyl-4-(p-tert. butyl-phenyl)indenyl)(2-methyl-4-phenyl-indenyl)zirconiumdichloride,
A-(2-isopropyl-4-(p-tert. butyl-phenyl)indenyl)(2,7-dimethyl-4-phenyl-indenyl)zirconiumdichloride,
A-(2-isopropyl-4-(p-tert. butyl-phenyl)indenyl)(2,5,6,7-tetramethyl-4-phenyl-indenyl)zirconiumdichloride,
A-(2-isopropyl-6-methyl-4-(p-tert. butyl-phenyl)indenyl)(2,6-dimethyl-4-phenyl-indenyl)zirconiumdichloride,
A-(2-isopropyl-4-phenyl-indenyl)(2,7-dimethyl-4-(p-tert. butylphenyl)indenyl)zirconiumdichloride,
A-(2-isopropyl-4-phenyl-indenyl)(2,5,6,7-tetramethyl-4-(p-tert. butylphenyl)indenyl)zirconiumdichloride,
A-(2-isopropyl-6-methyl-4-phenyl-indenyl)(2,6-dimethyl-4-(p-tert. butylphenyl)indenyl)zirconiumdichloride,
A-(2-isopropyl-4-(p-tert. butyl-phenyl)indenyl)(2-methyl-4-(4-naphthyl)-indenyl)indenyl)zirconiumdichloride,
A-(2-isopropyl-4-(4-naphthyl)-indenyl)indenyl)(2-methyl-4-(p-tert. butylphenyl)indenyl)zirconiumdichloride,
A-bis(4-naphthyl-indenyl)zirconiumdichloride,
A-bis(2-methyl-benzo-indenyl)zirconiumdichloride A-bis(2-methylindenyl)zirconiumdichloride,
A-bis(2-methyl-4-(1-naphthyl)-indenyl)zirconiumdichloride,
A-bis(2-methyl-4-(2-naphthyl)-indenyl)zirconiumdichloride,
A-bis(2-methyl-4-phenyl-indenyl)zirconiumdichloride,
A-bis(2-methyl-4-t-butyl-indenyl)zirconiumdichloride,
A-bis(2-methyl-4-isopropyl-indenyl)zirconiumdichloride,
A-bis(2-methyl-4-ethyl-indenyl)zirconiumdichloride,
A-bis(2-methyl-4- acenaphth-indenyl)zirconiumdichloride,
A-bis(2,4-dimethyl-indenyl)zirconiumdichloride,
A-bis(2-ethyl-indenyl)zirconiumdichloride,
A-bis(2-ethyl-4-ethyl-indenyl)zirconiumdichloride,
A-bis(2-ethyl-4-phenyl-indenyl)zirconiumdichloride,
A-bis(2-methyl-4,6-diisopropyl-indenyl)zirconiumdichloride,
A-bis(2-methyl-4,5-diisopropyl-indenyl)zirconiumdichloride,
A-bis(2,4,6-trimethyl-indenyl)zirconiumdichloride,
A-bis(2,5,6-trimethyl-indenyl)zirconiumdichloride,
A-bis(2,4,7-trimethyl-indenyl)zirconiumdichloride,
A-bis(2-methyl-5-isobutyl-indenyl)zirconiumdichloride,
A-bis(2-methyl-5-t-butyl-indenyl)zirconiumdichloride,
A-bis(2-methyl-4-(tert-butyl-phenyl)-indenyl)zirconiumdichloride,
A-bis(2-methyl-4-(4-methyl-phenyl)-indenyl)zirconiumdichloride,
A-bis(2-methyl-4-(4-ethyl-phenyl)-indenyl)zirconiumdichloride,
A-bis(2-methyl-4-(4-trifluoromethyl-phenyl)-indenyl)zirconiumdichloride,
A-bis(2-methyl-4-(4-methoxy-phenyl)-indenyl)zirconiumdichloride,
A-bis(2-ethyl-4-(4-tert-butyl-phenyl)-indenyl)zirconiumdichloride,
A-bis(2-ethyl-4-(4-methyl-phenyl)-indenyl)zirconiumdichloride,
A-bis(2-ethyl-4-(4-ethyl-phenyl)-indenyl)zirconiumdichloride,
A-bis(2-ethyl-4-(4-trifluoromethyl-phenyl)-indenyl)zirconiumdichloride,
A-bis(2-ethyl-4-(4-methoxy-phenyl)-indenyl)zirconiumdichloride,
A-bis(2-methyl-4-(4-tert-butyl-phenyl)-indenyl)zirconiumdimethyl,
A-bis(2-methyl-4-(4-methyl-phenyl)-indenyl)zirconiumdimethyl,
A-bis(2-methyl-4-(4-ethyl-phenyl)-indenyl)zirconiumdimethyl,
A-bis(2-methyl-4-(4-trifluoromethyl-phenyl)-indenyl)zirconiumdimethyl,
A-bis(2-methyl-4-(4-methoxy-phenyl)-indenyl)zirconiumdimethyl,
A-bis(2-ethyl-4-(4-tert-butyl-phenyl)-indenyl)zirconiumdimethyl,
A-bis(2-ethyl-4-(4-methyl-phenyl)-indenyl)zirconiumdimethyl,
A-bis(2-ethyl-4-(4-ethyl-phenyl)-indenyl)zirconiumdimethyl,
A-bis(2-ethyl-4-(4-trifluoromethyl-phenyl)-indenyl)zirconiumdimethyl,
A-bis(2-ethyl-4-(4-methoxy-phenyl)-indenyl)zirconiumdimethyl,
A-bis(2-isopropyl-4-(tert-butyl-phenyl)-indenyl)zirconiumdichloride,
A-bis(2-isopropyl-4-(4-methyl-phenyl)-indenyl)zirconiumdichloride,
A-bis(2-isopropyl-4-(4-ethyl-phenyl)-indenyl)zirconiumdichloride,
A-bis(2-isopropyl-4-(4-trifluoromethyl-phenyl)-indenyl)zirconiumdichloride,
A-bis(2-isopropyl-4-(4-methoxy-phenyl)-indenyl)zirconiumdichloride,
A-bis(2-isopropyl-4-(4'-tert.-butyl-phenyl)-indenyl)zirconiumdichloride,
A-bis(2-isopropyl-4-(4'-tert.-butyl-phenyl)-indenyl)hafniumdichloride,
A-bis(2-isopropyl-4-(4'-tert.-butyl-phenyl)-indenyl)titaniumdichloride,
A-bis(2-isopropyl-4-(4'-methyl-phenyl)-indenyl)zirconiumdichloride,
A-bis(2-isopropyl-4-(4'-n-propyl-phenyl)-indenyl)zirconiumdichloride,
A-bis(2-isopropyl-4-(4'-n-butyl-phenyl)-indenyl)zirconiumdichloride,
A-bis(2-isopropyl-4-(4'-hexyl-phenyl)-indenyl)zirconiumdichloride,
A-bis(2-isopropyl-4-(4'-sec-butyl-phenyl)-indenyl)zirconiumdichloride,
A-bis(2-isopropyl-4-phenyl)-indenyl)zirconiumdichloride,
A-bis(2-isopropyl-4-(4'-methyl-phenyl)-indenyl)zirconiumdichloride,
A-bis(2-isopropyl-4-(4'-ethyl-phenyl)-indenyl)zirconiumdichloride,
A-bis(2-isopropyl-4-(4'-n-propyl-phenyl)-indenyl)zirconiumdichloride,
A-bis(2-isopropyl-4-(4'-n-butyl-phenyl)-indenyl)zirconiumdichloride,
A-bis(2-isopropyl-4-(4'-hexyl-phenyl)-indenyl)zirconiumdichloride,
A-bis(2-isopropyl-4-(4'-pentyl-phenyl)-indenyl)zirconiumdichloride,
A-bis(2-isopropyl-4-(4'-cyclohexyl-phenyl)-indenyl)zirconiumdichloride,
A-bis(2-isopropyl-4-(4'-sec-butyl-phenyl)-indenyl)zirconiumdichloride,
A-bis(2-isopropyl-4-(4'-tert.-butyl-phenyl)-indenyl)zirconiumdichloride,
A-bis(2-methyl-4-(4'-tert.-butyl-phenyl)-indenyl)zirconiumdichloride,
A-bis(2-methyl-4-(4'-tert.-butyl-phenyl)-indenyl)hafniumdichloride,
A-bis(2-methyl-4-(4'-tert.-butyl-phenyl)-indenyl)titaniumdichloride,
A-bis(2-methyl-4-(4'-methyl-phenyl)-indenyl)zirconiumdichloride,
A-bis(2-methyl-4-(4'-n-propyl-phenyl)-indenyl)zirconiumdichloride,
A-bis(2-methyl-4-(4'-n-butyl-phenyl)-indenyl)zirconiumdichloride,
A-bis(2-methyl-4-(4'-hexyl-phenyl)-indenyl)zirconiumdichloride,
A-bis(2-methyl-4-(4'-sec-butyl-phenyl)-indenyl)zirconiumdichloride,
A-bis(2-ethyl-4-phenyl-indenyl)zirconiumdichloride,
A-bis(2-ethyl-4-(4'-methyl-phenyl)-indenyl)zirconiumdichloride,
A-bis(2-ethyl-4-(4'-ethyl-phenyl)-indenyl)zirconiumdichloride,
A-bis(2-ethyl-4-(4'-n-propyl-phenyl)-indenyl)zirconiumdichloride,
A-bis(2-ethyl-4-(4'-n-butyl-phenyl)-indenyl)zirconiumdichloride,
A-bis(2-ethyl-4-(4'-hexyl-phenyl)-indenyl)zirconiumdichloride,
A-bis(2-ethyl-4-(4'-pentyl-phenyl)-indenyl)zirconiumdichloride,
A-bis(2-ethyl-4-(4'-cyclohexyl-phenyl)-indenyl)zirconiumdichloride,
A-bis(2-ethyl-4-(4'-sec-butyl-phenyl)-indenyl)zirconiumdichloride,
A-bis(2-ethyl-4-(4'-tert.-butyl-phenyl)-indenyl)zirconiumdichloride,
A-bis(2-n-propyl-4-phenyl-indenyl)zirconiumdichloride,
A-bis(2-n-propyl-4-(4'-methyl-phenyl)-indenyl)zirconiumdichloride,
A-bis(2-n-propyl-4-(4'-ethyl-phenyl)-indenyl)zirconiumdichloride,
A-bis(2-n-propyl-4-(4'-iso-propyl-phenyl)-indenyl)zirconiumdichloride,
A-bis(2-n-propyl-4-(4'-n-butyl-phenyl)-indenyl)zirconiumdichloride,
A-bis(2-n-propyl-4-(4'-hexyl-phenyl)-indenyl)zirconiumdichloride,
A-bis(2-n-propyl-4-(4'-cyclohexyl-phenyl)-indenyl)zirconiumdichloride,
A-bis(2-n-propyl-4-(4'-sec-butyl-phenyl)-indenyl)zirconiumdichloride,
A-bis(2-n-propyl-4-(4'-tert.-butyl-phenyl)-indenyl)zirconiumdichloride,
A-bis(2-n-butyl-4-phenyl-indenyl)zirconiumdichloride,
A-bis(2-n-butyl-4-(4'-methyl-phenyl)-indenyl)zirconiumdichloride,
A-bis(2-n-butyl-4-(4'-ethyl-phenyl)-indenyl)zirconiumdichloride,
A-bis(2-n-butyl-4-(4'-n-propyl-phenyl)-indenyl)zirconiumdichloride,
A-bis(2-n-butyl-4-(4'-iso-propyl-phenyl)-indenyl)zirconiumdichloride,
A-bis(2-n-butyl-4-(4'-n-butyl-phenyl)-indenyl)zirconiumdichloride,
A-bis(2-n-butyl-4-(4'-hexyl-phenyl)-indenyl)zirconiumdichloride,
A-bis(2-n-butyl-4-(4'-cyclohexyl-phenyl)-indenyl)zirconiumdichloride,
A-bis(2-n-butyl-4-(4'-sec-butyl-phenyl)-indenyl)zirconiumdichloride,
A-bis(2-n-butyl-4-(4'-tert.-butyl-phenyl)-indenyl)zirconiumdichloride,
A-bis(2-hexyl-4-phenyl-indenyl)zirconiumdichloride,
A-bis(2-hexyl-4-(4'-methyl-phenyl)-indenyl)zirconiumdichloride,
A-bis(2-hexyl-4-(4'-ethyl-phenyl)-indenyl)zirconiumdichloride,
A-bis(2-hexyl-4-(4'-n-propyl-phenyl)-indenyl)zirconiumdichloride,
A-bis(2-hexyl-4-(4'-iso-propyl-phenyl)-indenyl)zirconiumdichloride,
A-bis(2-hexyl-4-(4'-n-butyl-phenyl)-indenyl)zirconiumdichloride,
A-bis(2-hexyl-4-(4'-n-hexyl-phenyl)-indenyl)zirconiumdichloride,
A-bis(2-hexyl-4-(4'-cyclohexyl-phenyl)-indenyl)zirconiumdichloride,
A-bis(2-hexyl-4-(4'-sec-butyl-phenyl)-indenyl)zirconiumdichloride,
A-bis(2-hexyl-4-(4'-tert.-butyl-phenyl)-indenyl)zirconiumdichloride,
A-bis(2-methyl-4-(4'-tert.-butyl-phenyl)-indenyl)zirconiumbis(dimethylamine),
A-bis(2-ethyl-4-(4'-tert.-butyl-phenyl)-indenyl)zirconiumdibenzyl,
A-bis(2-methyl-4-(4'-tert.-butyl-phenyl)-indenyl)zirconiumdimethyl,
A-(2-methyl-4-azapentalene)(2-methyl-4-(4'-methyl-phenyl)-indenyl)zirconiumdichloride,
A-(2-methyl-5-azapentalene)(2-methyl-4-(4'-methyl-phenyl)-indenyl)zirconiumdichloride,
A-(2-methyl-6-azapentalene)(2-methyl-4-(4'-methyl-phenyl)-indenyl)zirconiumdichloride,
A-(2-methyl-4-azapentalene)(2-methyl-4-(4'-ethyl-phenyl)-indenyl)zirconiumdichloride,
A-(2-methyl-4-thiapentalene)(2-methyl-4-(4'-n-propyl-phenyl)-indenyl)-zirconiumdichloride,
A-(2-methyl-4-azapentalene)(2-methyl-4-(4'-isopropyl-phenyl)-indenyl)-zirconiumdichloride,
A-(2-methyl-6-azapentalene)(2-methyl-4-(4'-isopropyl-phenyl)-indenyl)-zirconiumdichloride,
A-(2,5-dimethyl-6-thiapentalene)(2-methyl-4-(4'-isopropyl-phenyl)-indenyl)-zirconiumdichloride,
A-(2-methyl-6-oxapentalen)(2-methyl-4-(4'-isopropyl-phenyl)-indenyl)zirconiumdichloride,
A-(2-methyl-6-azapentalene)(2-methyl-4-(4'-n-butyl-phenyl)-indenyl)zirconiumdichloride,
A-(2-methyl-5-thiapentalene)(2-methyl-4-(4'-n-butyl-phenyl)-indenyl)zirconiumdichloride,
A-(2-methyl-4-oxapentalene)(2-methyl-4-(4'-n-butyl-phenyl)-indenyl)zirconiumdichloride,
A-(2-methyl-4-thiapentalene)(2-methyl-4-(4'-s-butyl-phenyl)-indenyl)zirconiumdichloride,
A-(2-methyl-4-oxapentalene)(2-methyl-4-(4'-s-butyl-phenyl)-indenyl)zirconiumdichloride,
A-(2-methyl-4-azapentalene)(2-methyl-4-(4'-tert-butyl-phenyl)-indenyl)-zirconiumdichloride,
A-(2-methyl-6-azapentalene)(2-methyl-4-(4'-tert-butyl-phenyl)-indenyl)-zirconiumdichloride,
A-(2-methyl-4-azapentalene)(2-methyl-4-(4'-n-pentyl-phenyl)-indenyl)-zirconiumdichloride,
A-(2-methyl-N-phenyl-6-azapentalene)(2-methyl-4-(4'-n-pentyl-phenyl)-indenyl)-zirconiumdichloride,
A-(2-methyl-4-oxapentalene)(2-methyl-4-(4'-n-pentyl-phenyl)-indenyl)-zirconiumdichloride,
A-(2-methyl-4-azapentalene)(2-methyl-4-(4'-n-hexyl-phenyl)-indenyl)-zirconiumdichloride,
A-(2-methyl-4-thiapentalene)(2-methyl-4-(4'-n-hexyl-phenyl)-indenyl)-zirconiumdichloride,
A-(2-methyl-6-thiapentalene)(2-methyl-4-(4'-n-hexyl-phenyl)-indenyl)-zirconiumdichloride,
A-(2,5-dimethyl-4-thiapentalene)(2-methyl-4-(4'-n-hexyl-phenyl)-indenyl)-zirconiumdichloride,
A-(2,5-dimethyl-6-thiapentalene)(2-methyl-4-(4'-n-hexyl-phenyl)-indenyl)-zirconiumdichloride,
A-(2,5-dimethyl-6-thiapentalene)(2-methyl-4-(4'-cyclohexyl-phenyl)-indenyl)-zirconiumdichloride,
A-(2-methyl-4-azapentalene)(2-methyl-4-(4'-trimethylsilyl-phenyl)-indenyl)-zirconiumdichloride,
A-(2-methyl-4-thiapentalene)(2-methyl-4-(4'-trimethylsilyl-phenyl)-indenyl)-zirconiumdichloride,
A-(2-methyl-5-thiapentalene)(2-methyl-4-(4'-trimethylsilyl-phenyl)-indenyl)-zirconiumdichloride,
A-(2-methyl-6-thiapentalene)(2-methyl-4-(4'-trimethylsilyl-phenyl)-indenyl)-zirconiumdichloride,
A-(2,5-dimethyl-4-azapentalene)(2-methyl-4-(4'-adamantyl-phenyl)-indenyl)-zirconiumdichloride,
A-(2-methyl-4-thiapentalene)(2-methyl-4-(4'-adamantyl-phenyl)-indenyl)-zirconiumdichloride,
A-(2-methyl-6-thiapentalene)(2-methyl-4-(4'-adamantyl-phenyl)-indenyl)-zirconiumdichloride,
A-(2,5-dimethyl-4-thiapentalene)(2-methyl-4-(4'-adamantyl-phenyl)-indenyl)-zirconiumdichloride,
A-(2-methyl-4-azapentalene)(2-methyl-4-(4'-tris(trifluoromethyl)methyl-phenyl)-indenyl)-zirconiumdichloride,
A-(2,5-dimethyl-4-azapentalene)(2-methyl-4-(4'-tris(trifluoromethyl)methyl-phenyl)-indenyl) zirconiumdichloride,
A-(2-methyl-4-thiapentalene)(2-methyl-4-(4'-tris(trifluoromethyl)methyl-phenyl)-indenyl)zirconiumdichloride,
A-(2-methyl-6-thiapentalene)(2-methyl-4-(4'-tris(trifluoromethyl)methyl-phenyl)-indenyl)zirconiumdichloride,
A-(2-methyl-4-azapentalene)(2-ethyl-4-(4'-tert-butyl-phenyl)-indenyl)-zirconiumdichloride,
A-(2-methyl-5-azapentalene)(2-n-butyl-4-(4'-tert-butyl-phenyl)-indenyl)-zirconiumdichloride,
A-(2-methyl-N-phenyl-6-azapentalene)(2-methyl-4-(4'-tert-butyl-phenyl)-indenyl)-zirconiumdichloride,
A-(2-methyl-4-azapentalene)(2-methylindenyl)zirconiumdichloride,
A-(2-methyl-N-phenyl-4-azapentalene)(2-methylindenyl)zirconiumdichloride,
A-(2-methyl-4-thiapentalene)(2-methylindenyl)zirconiumdichloride,
A-(2-methyl-5-thiapentalene)(2-methylindenyl)zirconiumdichloride,
A-(2-methyl-6-thiapentalene)(2-methylindenyl)zirconiumdichloride,
A-(2-methyl-4-azapentalene)(indenyl)zirconiumdichloride,
A-(2-methyl-5-azapentalene)(indenyl)zirconiumdichloride,
A-(2-methyl-6-azapentalene)(indenyl)zirconiumdichloride,
A-(2-methyl-N-phenyl-4-azapentalene)(indenyl)zirconiumdichloride,
A-(2-methyl-N-phenyl-5-azapentalene)(indenyl)zirconiumdichloride,
A-(2-methyl-N-phenyl-6-azapentalene)(indenyl)zirconiumdichloride,
A-(2,5-dimethyl-N-phenyl-6-azapentalene)(indenyl)zirconiumdichloride,
A-(2-methyl-4-thiapentalene)(indenyl)zirconiumdichloride,
A-(2-methyl-5-thiapentalene)(indenyl)zirconiumdichloride,
A-(2-methyl-6-thiapentalene)(indenyl)zirconiumdichloride,
A-(2,5-dimethyl-4-thiapentalene)(indenyl)zirconiumdichloride,
A-(2-methyl-4-azapentalene)(2-methyl-4-phenyl-indenyl)zirconiumdichloride,
A-(2-methyl-5-azapentalene)(2-methyl-4-phenyl-indenyl)zirconiumdichloride,
A-(2-methyl-6-azapentalene)(2-methyl-4-phenyl-indenyl)zirconiumdichloride,
A-(2-methyl-N-phenyl-4-azapentalene)(2-methyl-4-phenyl-indenyl)zirconiumdichloride,
A-(2-methyl-N-phenyl-5-azapentalene)(2-methyl-4-phenyl-indenyl)zirconiumdichloride,
A-(2-methyl-4-thiapentalene)(2-methyl-4-phenyl-indenyl)zirconiumdichloride,
A-(2-methyl-5-thiapentalene)(2-methyl-4-phenyl-indenyl)zirconiumdichloride,
A-(2-methyl-6-thiapentalene)(2-methyl-4-phenyl-indenyl)zirconiumdichloride,
A-(2-methyl-4-oxapentalene)(2-methyl-4-phenyl-indenyl)zirconiumdichloride,
A-(2-methyl-4-azapentalene) (2-methyl-4, 5 -benzo-indenyl)zirconiumdichloride,
A-(2-methyl-N-phenyl-4-azapentalene)(2-methyl-4,5-benzo-indenyl)zirconiumdichloride,
A-(2-methyl-N-phenyl-5-azapentalene)(2-methyl-4,5-benzo-indenyl)zirconiumdichloride,
A-(2-methyl-N-phenyl-6-azapentalene)(2-methyl-4,5-benzo-indenyl)zirconiumdichloride,
A-(2-methyl-4-thiapentalene)(2-methyl-4,5-benzo-indenyl)zirconiumdichloride,
A-(2-methyl-5-thiapentalene)(2-methyl-4,5-benzo-indenyl)zirconiumdichloride,
A-(2-methyl-6-thiapentalene)(2-methyl-4,5-benzo-indenyl)zirconiumdichloride,
A-(2-methyl-4-oxapentalene)(2-methyl-4,5-benzo-indenyl)zirconiumdichloride,
A-(2-methyl-5-oxapentalene)(2-methyl-4,5-benzo-indenyl)zirconiumdichloride,
A-(2-methyl-6-oxapentalene)(2-methyl-4,5-benzo-indenyl)zirconiumdichloride,
A-bis(2-methyl-4-azapentalene)zirconiumdichloride,
A-bis(2-methyl-N-phenyl-4-azapentalene)zirconiumdichloride,
A-bis(2-methyl-4-thiapentalene)zirconiumdichloride,
A-bis[2-t-butylmethyl-4-(1-naphthyl)-indenyl]zirconiumdichloride,
A-bis[2-t-butylmethyl-4-(2-naphthyl)-indenyl]zirconiumdichloride,
A-bis[2-t-butylmethyl-4-(4-methyl-phenyl)-indenyl]zirconiumdichloride,
A-bis[2-t-butylmethyl-4-(4-biphenyl)-indenyl]zirconiumdichloride,
A-bis[2-t-butylmethyl-4-(4-ethyl-phenyl)-indenyl]zirconiumdichloride,
A-bis[2-t-butylmethyl-4-(4-n-propyl-phenyl)-indenyl]zirconiumdichloride,
A-bis[2-t-butylmethyl-4-(4-i-propyl-phenyl)-indenyl]zirconiumdichloride,
A-bis[2-t-butylmethyl-4-(4-t-butyl-phenyl)-indenyl]zirconiumdichloride,
A-bis[2-t-butylmethyl-4-(4-sec-butyl-phenyl)-indenyl]zirconiumdichloride,
A-bis[2-t-butylmethyl-4-(4-cyclohexyl-phenyl)-indenyl]zirconiumdichloride,
A-bis[2-t-butylmethyl-4-(4-trimethylsilyl-phenyl)-indenyl]zirconiumdichloride,
A-bis[2-t-butylmethyl-4-(4-adamantyl-phenyl)-indenyl]zirconiumdichloride,
A-bis[2-t-butylmethyl-4-(3-biphenyl)-indenyl]zirconiumdichloride,
A-bis[2-t-butylmethyl-4-(3,5-dimethyl-phenyl)-indenyl]zirconiumdichloride,
A-bis[2-t-butylmethyl-4-(3,5-di-(triftuoromethyl)-phenyl)-indenyl]zirconiumdichloride,
A-bis[2-t-butylmethyl-4-(3,5-terphenyl)-indenyl]zirconiumdichloride,
A-bis[2-cyclopentylmethyl-4-(1-naphthyl)-indenyl]zirconiumdichloride,
A-bis[2-cyclopentylmethyl-4-(2-naphthyl)-indenyl]zirconiumdichloride,
A-bis[2-cyclopentylmethyl-4-(4-methyl-phenyl)-indenyl]zirconiumdichloride,
A-bis[2-cyclopentylmethyl-4-(4-biphenyl)-indenyl]zirconiumdichloride,
A-bis[2-cyclopentylmethyl-4-(4-ethyl-phenyl)-indenyl]zirconiumdichloride,
A-bis[2-cyclopentylmethyl-4-(4-n-propyl-phenyl)-indenyl]zirconiumdichloride,
A-bis[2-cyclopentylmethyl-4-(4-i-propyl-phenyl)-indenyl]zirconiumdichloride,
A-bis[2-cyclopentylmethyl-4-(4-t-butyl-phenyl)-indenyl]zirconiumdichloride,
A-bis[2-cyclopentylmethyl-4-(4-sec-butyl-phenyl)-indenyl]zirconiumdichloride,
A-bis[2-cyclopentylmethyl-4-(4-cyclohexyl-phenyl)-indenyl]zirconiumdichloride,
A-bis[2-cyclopentylmethyl-4-(4-trimethylsilyl-phenyl)-indenyl]zirconiumdichloride,
A-bis[2-cyclopentylmethyl-4-(4-adamantyl-phenyl)-indenyl]zirconiumdichloride,
A-bis[2-cyclopentylmethyl-4-(3-biphenyl)-indenyl]zirconiumdichloride,
A-bis[2-cyclopentylmethyl-4-(3,5-dimethyl-phenyl)-indenyl]zirconiumdichloride,
A-bis[2-cyclopentylmethyl-4-(3,5-di-(trifluoromethyl)-phenyl)-indenyl]zirconiumdichloride,
A-bis[2-cyclopentylmethyl-4-(3,5-terphenyl)-indenyl]zirconiumdichloride,
A-bis[2-cyclohexylmethyl-4-(1-naphthyl)-indenyl]zirconiumdichloride,
A-bis[2-cyclohexylmethyl-4-(2-naphthyl)-indenyl]zirconiumdichloride,
A-bis[2-cyclohexylmethyl-4-(4-methyl-phenyl)-indenyl]zirconiumdichloride,
A-bis[2-cyclohexylmethyl-4-(4-biphenyl)-indenyl]zirconiumdichloride,
A-bis[2-cyclohexylmethyl-4-(4-ethyl-phenyl)-indenyl]zirconiumdichloride,
A-bis[2-cyclohexylmethyl-4-(4-n-propyl-phenyl)-indenyl]zirconiumdichloride,
A-bis[2-cyclohexylmethyl-4-(4-i-propyl-phenyl)-indenyl]zirconiumdichloride,
A-bis[2-cyclohexylmethyl-4-(4-t-butyl-phenyl)-indenyl]zirconiumdichloride,
A-bis[2-cyclohexylmethyl-4-(4-sec-butyl-phenyl)-indenyl]zirconiumdichloride,
A-bis[2-cyclohexylmethyl-4-(4-cyclohexyl-phenyl)-indenyl]zirconiumdichloride,
A-bis[2-cyclohexylmethyl-4-(4-trimethylsilyl-phenyl)-indenyl]zirconiumdichloride,
A-bis[2-cyclohexylmethyl-4-(4-adamantyl-phenyl)-indenyl]zirconiumdichloride,
A-bis[2-cyclohexylmethyl-4-(3-biphenyl)-indenyl]zirconiumdichloride,
A-bis[2-cyclohexylmethyl-4-(3,5-dimethyl-phenyl)-indenyl]zirconiumdichloride,
A-bis[2-cyclohexylmethyl-4-(3,5-di-(trifluoromethyl)-phenyl)-indenyl]zirconiumdichloride,
A-bis[2-cyclohexylmethyl-4-(3,5-terphenyl)-indenyl]zirconiumdichloride,
A-bis[2-cycloheptylmethyl-4-(1-naphthyl)-indenyl]zirconiumdichloride,
A-bis[2-cycloheptylmethyl-4-(2-naphthyl)-indenyl]zirconiumdichloride,
A-bis[2-cycloheptylmethyl-4-(4-methyl-phenyl)-indenyl]zirconiumdichloride,
A-bis[2-cycloheptylmethyl-4-(4-biphenyl)-indenyl]zirconiumdichloride,
A-bis[2-cycloheptylmethyl-4-(4-ethyl-phenyl)-indenyl]zirconiumdichloride,
A-bis[2-cycloheptylmethyl-4-(4-n-propyl-phenyl)-indenyl]zirconiumdichloride,
A-bis[2-cycloheptylmethyl-4-(4-i-propyl-phenyl)-indenyl]zirconiumdichloride,
A-bis[2-cycloheptylmethyl-4-(4-t-butyl-phenyl)-indenyl]zirconiumdichloride,
A-bis[2-cycloheptylmethyl-4-(4-sec-butyl-phenyl)-indenyl]zirconiumdichloride,
A-bis[2-cycloheptylmethyl-4-(4-cyclohexyl-phenyl)-indenyl]zirconiumdichloride,
A-bis [2-cycloheptylmethyl-4-(4-trimethylsilyl-phenyl)-indenyl]zirconiumdichloride,
A-bis [2-cycloheptylmethyl-4-(4-adamantyl-phenyl)-indenyl]zirconiumdichloride,
A-bis[2-cycloheptylmethyl-4-(3-biphenyl)-indenyl]zirconiumdichloride,
A-bis[2-cycloheptylmethyl-4-(3,5-dimethyl-phenyl)-indenyl]zirconiumdichloride,
A-bis[2-cycloheptylmethyl-4-(3,5-di-(trifluoromethyl)-phenyl)-indenyl]zirconiumdichloride,
A-bis[2-cycloheptylmethyl-4-(3,5-terphenyl)-indenyl]zirconiumdichloride,
A-bis[2-adamantylmethyl-4-(1-naphthyl)-indenyl]zirconiumdichloride,
A-bis[2-adamantylmethyl-4-(2-naphthyl)-indenyl]zirconiumdichloride,
A-bis[2-adamantylmethyl-4-(4-methyl-phenyl)-indenyl]zirconiumdichloride,
A-bis [2-adamantylmethyl-4-(4-biphenyl)-indenyl]zirconiumdichloride,
A-bis[2-adamantylmethyl-4-(4-ethyl-phenyl)-indenyl]zirconiumdichloride,
A-bis[2-adamantylmethyl-4-(4-n-propyl-phenyl)-indenyl]zirconiumdichloride,
A-bis[2-adamantylmethyl-4-(4-i-propyl-phenyl)-indenyl]zirconiumdichloride,
A-bis[2-adamantylmethyl-4-(4-t-butyl-phenyl)-indenyl]zirconiumdichloride,
A-bis[2-adamantylmethyl-4-(4-sec-butyl-phenyl)-indenyl]zirconiumdichloride,
A-bis[2-adamantylmethyl-4-(4-cyclohexyl-phenyl)-indenyl]zirconiumdichloride,
A-bis[2-adamantylmethyl-4-(4-trimethylsilyl-phenyl)-indenyl]zirconiumdichloride,
A-bis[2-adamantylmethyl-4-(4-adamantyl-phenyl)-indenyl]zirconiumdichloride,
A-bis[2-adamantylmethyl-4-(3-biphenyl)-indenyl]zirconiumdichloride,
A-bis[2-adamantylmethyl-4-(3,5-dimethyl-phenyl)-indenyl]zirconiumdichloride,
A-bis[2-adamantylmethyl-4-(3,5-di-(trifluoromethyl)-phenyl)-indenyl]zirconiumdichloride,
A-bis[2-adamantylmethyl-4-(3,5-terphenyl)-indenyl]zirconiumdichloride,
A-bis[2-trimethylsilylmethyl-4-(4-t-butyl-phenyl)-indenyl]zirconiumdichloride,
A-bis[2-(2-methoxy-2-methyl-propyl)-4-(4-t-butyl-phenyl)-indenyl]zirconiumdichloride,
A-bis[2-(2,6-dimethyl-benzyl)-4-(4-t-butyl-phenyl)-indenyl]zirconiumdichloride,
A-bis[2-(2,4,6-trimethyl-benzyl)-4-(4-t-butyl-phenyl)-indenyl]zirconiumdichloride,
A-bis[2-bicyclo[2.2.1]heptylmethyl-4-(1-naphthyl)-indenyl]zirconiumdichloride,
A-bis[2-bicyclo[2.2.1]heptylmethyl-4-(2-naphthyl)-indenyl]zirconiumdichloride,
A-bis[2-bicyclo[2.2.1]heptylmethyl-4-(4-methyl-phenyl)-indenyl]zirconiumdichloride,
A-bis[2-bicyclo[2.2.1]heptylmethyl-4-(4-biphenyl)-indenyl]zirconiumdichloride,
A-bis[2-bicyclo[2.2.1]heptylmethyl-4-(4-ethyl-phenyl)-indenyl]zirconiumdichloride,
A-bis[2-bicyclo[2.2.1]heptylmethyl-4-(4-n-propyl-phenyl)-indenyl]zirconiumdichloride,
A-bis[2-bicyclo[2.2.1]heptylmethyl-4-(4-i-propyl-phenyl)-indenyl]zirconiumdichloride,
A-bis[2-bicyclo[2.2.1]heptylmethyl-4-(4-t-butyl-phenyl)-indenyl]zirconiumdichloride,
A-bis[2-bicyclo[2.2.1]heptylmethyl-4-(4-sec-butyl-phenyl)-indenyl]zirconiumdichloride,
A-bis[2-bicyclo[2.2.1]heptylmethyl-4-(4-cyclohexyl-phenyl)-indenyl]zirconiumdichloride,
A-bis[2-bicyclo[2.2.1]heptylmethyl-4-(4-trimethylsilyl-phenyl)-indenyl]zirconiumdichloride,
A-bis[2-bicyclo[2.2.1]heptylmethyl-4-(4-adamantyl-phenyl)-indenyl]zirconiumdichloride,
A-bis[2-bicyclo[2.2.1]heptylmethyl-4-(3-biphenyl)-indenyl]zirconiumdichloride,
A-bis[2-bicyclo[2.2.1]heptylmethyl-4-(3,5-dimethyl-phenyl)-indenyl]zirconiumdichloride,
A-bis[2-bicyclo[2.2.1]heptylmethyl-4-(3,5-di-(trifluoromethyl)-phenyl)-indenyl]zirconiumdichloride,
A-bis[2-bicyclo[2.2.1]heptylmethyl-4-(3,5-terphenyl)-indenyl]zirconiumdichloride,
A-bis[2-cyclohexylmethyl-4-(1-naphthyl)-6-methyl-indenyl]zirconiumdichloride,
A-bis[2-cyclohexylmethyl-4-(2-naphthyl)-6-methyl-indenyl]zirconiumdichloride,
A-bis[2-cyclohexylmethyl-4-(4-methyl-phenyl)-6-methyl-indenyl]zirconiumdichloride,
A-bis[2-cyclohexylmethyl-4-(4-biphenyl)-6-methyl-indenyl]zirconiumdichloride,
A-bis[2-cyclohexylmethyl-4-(4-ethyl-phenyl)-6-methyl-indenyl]zirconiumdichloride,
A-bis[2-cyclohexylmethyl-4-(4-n-propyl-phenyl)-6-methyl-indenyl]zirconiumdichloride,
A-bis[2-cyclohexylmethyl-4-(4-i-propyl-phenyl)-6-methyl-indenyl]zirconiumdichloride,
A-bis[2-cyclohexylmethyl-4-(4-t-butyl-phenyl)-6-methyl-indenyl]zirconiumdichloride,
A-bis[2-cyclohexylmethyl-4-(4-sec-butyl-phenyl)-6-methyl-indenyl]zirconiumdichloride,
A-bis[2-cyclohexylmethyl-4-(4-cyclohexyl-phenyl)-6-methyl-indenyl]zirconiumdichloride,
A-bis[2-cyclohexylmethyl-4-(4-trimethylsilyl-phenyl)-6-methylindenyl]zirconiumdichloride,
A-bis[2-cyclohexylmethyl-4-(4-adamantyl-phenyl)-6-methyl-indenyl]zirconiumdichloride,
A-bis[2-cyclohexylmethyl-4-(3-biphenyl)-6-methyl-indenyl]zirconiumdichloride,
A-bis[2-cyclohexylmethyl-4-(3,5-dimethyl-phenyl)-6-methyl-indenyl]zirconiumdichloride,
A-bis[2-cyclohexylmethyl-4-(3,5-di-(trifluoromethyl)-phenyl)-6-methylindenyl]zirconiumdichloride,
A-bis[2-cyclohexylmethyl-4-(3,5-terphenyl)-6-methyl-indenyl]zirconiumdichloride,
A-bis[2-cyclohexylmethyl-4-(1-naphthyl)-7-methyl-indenyl]zirconiumdichloride,
A-bis[2-cyclohexylmethyl-4-(2-naphthyl)-7-methyl-indenyl]zirconiumdichloride,
A-bis[2-cyclohexylmethyl-4-(4-methyl-phenyl)-7-methyl-indenyl]zirconiumdichloride,
A-bis[2-cyclohexylmethyl-4-(4-biphenyl)-7-methyl-indenyl]zirconiumdichloride,
A-bis[2-cyclohexylmethyl-4-(4-ethyl-phenyl)-7-methyl-indenyl]zirconiumdichloride,
A-bis[2-cyclohexylmethyl-4-(4-n-propyl-phenyl)-7-methyl-indenyl]zirconiumdichloride,
A-bis[2-cyclohexylmethyl-4-(4-i-propyl-phenyl)-7-methyl-indenyl]zirconiumdichloride,
A-bis[2-cyclohexylmethyl-4-(4-t-butyl-phenyl)-7-methyl-indenyl]zirconiumdichloride,
A-bis[2-cyclohexylmethyl-4-(4-sec-butyl-phenyl)-7-methyl-indenyl]zirconiumdichloride,
A-bis[2-cyclohexylmethyl-4-(4-cyclohexyl-phenyl)-7-methyl-indenyl]zirconiumdichloride,
A-bis[2-cyclohexylmethyl-4-(4-trimethylsilyl-phenyl)-7-methylindenyl]zirconiumdichloride,
A-bis[2-cyclohexylmethyl-4-(4-adamantyl-phenyl)-7-methyl-indenyl]zirconiumdichloride,
A-bis[2-cyclohexylmethyl-4-(3-biphenyl)-7-methyl-indenyl]zirconiumdichloride,
A-bis[2-cyclohexylmethyl-4-(3,5-dimethyl-phenyl)-7-methyl-indenyl]zirconiumdichloride,
A-bis[2-cyclohexylmethyl-4-(3,5-di-(trifluoromethyl)-phenyl)-7-methylindenyl]zirconiumdichloride,
A-bis[2-cyclohexylmethyl-4-(3,5-terphenyl)-7-methyl-indenyl]zirconiumdichloride,
A-bis[2-[(1-methylcyclohexyl)methyl]-4-(tert-butylphenyl)-1-indenyl]-zirconiumdichloride,
A-bis[2-[(1-methylcyclopentyl)methyl]-4-(tert-butylphenyl)-1-indenyl]-zirconiumdichloride,
A-bis[2-[(1-methylcycloheptyl)methyl]-4-(tert-butylphenyl)-1-indenyl]-zirconiumdichloride,
A-bis[2-[(1-methylcyclononyl)methyl]-4-(tert-butylphenyl)-1-indenyl]-zirconiumdichloride,
A-bis[2-[(1-methylcyclooctyl)methyl]-4-(tert-butylphenyl)-1-indenyl]-zirconiumdichloride,
A-bis[2-[(1-ethylcyclohexyl)methyl]-4-(tert-butylphenyl)-1-indenyl]-zirconiumdichloride,
A-bis[2-[(1-ethylcyclopentyl)methyl]-4-(tert-butylphenyl)-1-indenyl]-zirconiumdichloride,
A-bis[2-[(1-ethylcycloheptyl)methyl]-4-(tert-butylphenyl)-1-indenyl]-zirconiumdichloride,
A-bis[2-[(1-ethylcyclononyl)methyl]-4-(tert-butylphenyl)-1-indenyl]-zirconiumdichloride,
A-bis[2-[(1-ethylcyclooctyl)methyl]-4-(tert-butylphenyl)-1-indenyl]-zirconiumdichloride,
A-bis[2-[(1-ethylcyclobutyl)methyl]-4-(tert-butylphenyl)-1-indenyl]-zirconiumdichloride,
A-bis[2-[(1-propylcyclohexyl)methyl]-4-(tert-butylphenyl)-1-indenyl]-zirconiumdichloride,
A-bis[2-[(1-propylcyclopentyl)methyl]-4-(tert-butylphenyl)-1-indenyl]-zirconiumdichloride,
A-bis[2-[(1-propylcycloheptyl)methyl]-4-(tert-butylphenyl)-1-indenyl]-zirconiumdichloride,
A-bis[2-[(1-propylcyclononyl)methyl]-4-(tert-butylphenyl)-1-indenyl]-zirconium dichloride
A-bis[2-[(1-propylcyclooctyl)methyl]-4-(tert-butylphenyl)-1-indenyl]-zirconium dichloride
A-bis[2-[(1-propylcyclobutyl)methyl]-4-(tert-butylphenyl)-1-indenyl]-zirconium dichloride
A-bis[2-[(1-propylcyclopropyl)methyl]-4-(tert-butylphenyl)-1-indenyl]-zirconium dichloride
A-bis[2-[(1-methylcyclohexyl)methyl]-4-(1-naphthyl)-1-indenyl]-zirconium dichloride
A-bis[2-[(1-methylcyclopentyl)methyl]-4-(1-naphthyl)-1-indenyl]-zirconium dichloride
A-bis[2-[(1-methylcycloheptyl)methyl]-4-(1-naphthyl)-1-indenyl]-zirconium dichloride
A-bis [2-[(1-methylcyclononyl)methyl]-4-(1-naphthyl)-1-indenyl]-zirconium dichloride
A-bis[2-[(1-methylcyclooctyl)methyl]-4-(1-naphthyl)-1-indenyl]-zirconium dichloride
A-bis[2-[(1-ethylcyclohexyl)methyl]-4-(1-naphthyl)-1-indenyl]-zirconium dichloride
A-bis[2-[(1-ethylcyclopentyl)methyl]-4-(1-naphthyl)-1-indenyl]-zirconium dichloride
A-bis[2-[(1-ethylcycloheptyl)methyl]-4-(1-naphthyl)-1-indenyl]-zirconium dichloride
A-bis[2-[(1-ethylcyclononyl)methyl]-4-(1-naphthyl)-1-indenyl]-zirconium dichloride
A-bis[2-[(1-ethylcyclooctyl)methyl]-4-(1-naphthyl)-1-indenyl]-zirconium dichloride
A-bis [2-[(1-ethylcyclobutyl)methyl]-4-(1-naphthyl)-1-indenyl]-zirconium dichloride
A-bis[2-[(1-propylcyclohexyl)methyl]-4-(1-naphthyl)-1-indenyl]-zirconium dichloride
A-bis[2-[(1-propylcyclopentyl)methyl]-4-(1-naphthyl)-1-indenyl]-zirconium dichloride
A-bis[2-[(1-propylcycloheptyl)methyl]-4-(1-naphthyl)-1-indenyl]-zirconium dichloride
A-bis[2-[(1-propylcyclononyl)methyl]-4-(1-naphthyl)-1-indenyl]-zirconium dichloride
A-bis[2-[(1-propylcyclooctyl)methyl]-4-(1-naphthyl)-1-indenyl]-zirconium dichloride
A-bis[2-[(1-propylcyclobutyl)methyl]-4-(1-naphthyl)-1-indenyl]-zirconium dichloride
A-bis[2-[(1-propylcyclopropyl)methyl]-4-(1-naphthyl)-1-indenyl]-zirconium dichloride
A-bis[2-[(1-methylcyclohexyl)methyl]-4-phenyl-1-indenyl]-zirconium dichloride
A-bis[2-[(1-methylcyclopentyl)methyl]-4-phenyl-1-indenyl]-zirconium dichloride
A-bis[2-[(1-methylcycloheptyl)methyl]-4-phenyl-1-indenyl]-zirconium dichloride
A-bis[2-[(1-methylcyclononyl)methyl]-4-phenyl-1-indenyl]-zirconium dichloride
A-bis [2-[(1-methylcyclooctyl)methyl]-4-phenyl-1-indenyl]-zirconium dichloride
A-bis[2-[(1-ethylcyclohexyl)methyl]-4-phenyl-1-indenyl]-zirconium dichloride
A-bis[2-[(1-ethylcyclopentyl)methyl]-4-phenyl-1-indenyl]-zirconium dichloride
A-bis[2-[(1-ethylcycloheptyl)methyl]-4-phenyl-1-indenyl]-zirconium dichloride
A-bis[2-[(1-ethylcyclononyl)methyl]-4-phenyl-1-indenyl]-zirconium dichloride
A-bis[2-[(1-ethylcyclooctyl)methyl]-4-phenyl-1-indenyl]-zirconium dichloride
A-bis[2-[(1-ethylcyclobutyl)methyl]-4-phenyl-1-indenyl]-zirconium dichloride
A-bis[2-[(1-propylcyclohexyl)methyl]-4-phenyl-1-indenyl]-zirconium dichloride
A-bis[2-[(1-propylcyclopentyl)methyl]-4-phenyl-1-indenyl]-zirconium dichloride
A-bis[2-[(1-propylcycloheptyl)methyl]-4-phenyl-1-indenyl]-zirconium dichloride
A-bis[2-[(1-propylcyclononyl)methyl]-4-phenyl-1-indenyl]-zirconium dichloride
A-bis[2-[(1-propylcyclooctyl)methyl]-4-phenyl-1-indenyl]-zirconium dichloride
A-bis[2-[(1-propylcyclobutyl)methyl]-4-phenyl-1-indenyl]-zirconium dichloride
A-bis[2-[(1-propylcyclopropyl)methyl]-4-phenyl-1-indenyl]-zirconium dichloride
A-bis[2-[(1-methylcyclohexyl)methyl]-4-(2-naphthyl)-1-indenyl]-zirconium dichloride
A-bis[2-[(1-methylcyclopentyl)methyl]-4-(2-naphthyl)-1-indenyl]-zirconium dichloride
A-bis[2-[1-methylcydoheptyl)methyl]-4-(2-naphthyl)-1-indenyl]-zirconium dichloride
A-bis[2-[(1-methylcyclononyl)methyl]-4-(2-naphthyl)-1-indenyl]-zirconium dichloride
A-bis[2-[(1-methylcyclooctyl)methyl]-4-(2-naphthyl)-1-indenyl]-zirconium dichloride
A-bis[2-[(1-ethylcyclohexyl)methyl]-4-(2-naphthyl)-1-indenyl]-zirconium dichloride
A-bis[2-[(1-ethylcyclopentyl)methyl]-4-(2-naphthyl)-1-indenyl]-zirconium dichloride
A-bis[2-[(1-ethylcycloheptyl)methyl]-4-(2-naphthyl)-1-indenyl]-zirconium dichloride
A-bis[2-[(1-ethylcyclononyl)methyl]-4-(2-naphthyl)-1-indenyl]-zirconium dichloride
A-bis[2-[(1-ethylcyclooctyl)methyl]-4-(2-naphthyl)-1-indenyl]-zirconium dichloride
A-bis[2-[(1-ethylcyclobutyl)methyl]-4-(2-naphthyl)-1-indenyl)zirconium dichloride
A-bis[2-[(1-propylcyclohexyl)methyl]-4-(2-naphthyl)-1-indenyl]-zirconium dichloride
A-bis[2-[(1-propylcyclopentyl)methyl]-4-(2-naphthyl)-1-indenyl]-zirconium dichloride
A-bis[2-[(1-propylcycloheptyl)methyl]-4-(2-naphthyl)-1-indenyl]-zirconium dichloride
A-bis[2-[(1-propylcyclononyl)methyl]-4-(2-naphthyl)-1-indenyl]-zirconium dichloride
A-bis[2-[(1-propylcyclooctyl)methyl]-4-(2-naphthyl)-1-indenyl]-zirconium dichloride
A-bis[2-[(1-propylcyclobutyl)methyl]-4-(2-naphthyl)-1-indenyl]-zirconium dichloride
A-bis[2-[(1-propylcyclopropyl)methyl]-4-(2-naphthyl)-1-indenyl]-zirconium dichloride
A-bis[2-[(1-methylcyclohexyl)methyl]-4-(4-methyl-phenyl)-1-indenyl]-zirconium dichloride
A-bis[2-[(1-methylcyclopentyl)methyl]-4-(4-methyl-phenyl)-1-indenyl]-zirconium dichloride
A-bis[2-[(1-methylcycloheptyl)methyl]-4-(4-methyl-phenyl)-1-indenyl]-zirconium dichloride
A-bis[2-[(1-methylcyclononyl)methyl]-4-(4-methyl-phenyl)-1-indenyl]-zirconium dichloride
A-bis[2-[(1-methylcyclooctyl)methyl]-4-(4-methyl-phenyl)-1-indenyl]-zirconium dichloride
A-bis[2-[(1-ethylcyclohexyl)methyl]-4-(4-methyl-phenyl)-1-indenyl]-zirconium dichloride
A-bis[2-[(1-ethylcyclopentyl)methyl]-4-(4-methyl-phenyl)-1-indenyl]-zirconium dichloride
A-bis[2-[(1-ethylcycloheptyl)methyl]-4-(4-methyl-phenyl)-1-indenyl]-zirconium dichloride
A-bis[2-[(1-ethylcyclononyl)methyl]-4-(4-methyl-phenyl)-1-indenyl]-zirconium dichloride
A-bis[2-[(1-ethylcyclooctyl)methyl]-4-(4-methyl-phenyl)-1-indenyl]-zirconium dichloride
A-bis[2-[(1-ethylcyclobutyl)methyl]-4-(4-methyl-phenyl)-1-indenyl]-zirconium dichloride
A-bis[2-[(1-propylcyclohexyl)methyl]-4-(4-methyl-phenyl)-1-indenyl]-zirconium dichloride
A-bis[2-[(1-propylcyclopentyl)methyl]-4-(4-methyl-phenyl)-1-indenyl]-zirconium dichloride
A-bis[2-[(1-propylcycloheptyl)methyl]-4-(4-methyl-phenyl)-1-indenyl]-zirconium dichloride
A-bis[2-[(1-propylcyclononyl)methyl]-4-(4-methyl-phenyl)-1-indenyl]-zirconium dichloride
A-bis[2-[(1-propylcyclooctyl)methyl]-4-(4-methyl-phenyl)-1-indenyl]-zirconium dichloride
A-bis[2-[(1-propylcyclobutyl)methyl]-4-(4-methyl-phenyl)-1-indenyl]-zirconium dichloride
A-bis[2-[(1-propylcyclopropyl)methyl]-4-(4-methyl-phenyl)-1-indenyl]-zirconium dichloride
A-bis[2-[(1-methylcyclohexyl)methyl]-4-(3,5-dimethyl-phenyl)-1-indenyl]-zirconium dichloride
A-bis[2-[(1-methylcyclopentyl)methyl]-4-(3,5-dimethyl-phenyl)-1-indenyl]-zirconium dichloride
A-bis[2-[(1-methylcycloheptyl)methyl]-4-(3,5-dimethyl-phenyl)-1-indenyl]-zirconium dichloride
A-bis[2-[(1-methylcyclononyl)methyl]-4-(3,5-dimethyl-phenyl)-1-indenyl]-zirconium dichloride
A-bis[2-[(1-methylcyclooctyl)methyl]-4-(3,5-dimethyl-phenyl)-1-indenyl]-zirconium dichloride
A-bis[2-[(1-ethylcyclohexyl)methyl]-4-(3,5-dimethyl-phenyl)-1-indenyl]-zirconium dichloride
A-bis[2-[(1-ethylcyclopentyl)methyl]-4-(3,5-dimethyl-phenyl)-1-indenyl]-zirconium dichloride
A-bis[2-[(1-ethylcycloheptyl)methyl]-4-(3,5-dimethyl-phenyl)-1-indenyl]-zirconium dichloride
A-bis[2-[(1-ethylcyclononyl)methyl]-4-(3,5-dimethyl-phenyl)-1-indenyl]-zirconium dichloride
A-bis[2-[(1-ethylcyclooctyl)methyl]-4-(3,5-dimethyl-phenyl)-1-indenyl]-zirconium dichloride
A-bis[2-[(1-ethylcyclobutyl)methyl]-4-(3,5-dimethyl-phenyl)-1-indenyl]-zirconium dichloride
A-bis[2-[(1-propylcyclohexyl)methyl]-4-(3,5-dimethyl-phenyl)-I-indenyl]-zirconium dichloride
A-bis[2-[(1-propylcyclopentyl)methyl-4-(3,5-dimethyl-phenyl)-1-indenyl]-zirconium dichloride
A-bis[2-[(1-propylcycloheptyl)methyl]-4-(3,5-dimethyl-phenyl)-1-indenyl]-zirconium dichloride
A-bis[2-[(1-propylcyclononyl)methyl]-4-(3,5-dimethyl-phenyl)-1-indenyl]-zirconium dichloride
A-bis[2-[(1-propylcyclooctyl)methyl]-4-(3,5-dimethyl-phenyl)-1-indenyl]-zirconium dichloride
A-bis[2-[(1-propylcyclobutyl)methyl]-4-(3,5-dimethyl-phenyl)-1-indenyl]-zirconium dichloride
A-bis[2-[(1-propylcyclopropyl)methyl]-4-(3,5-dimethyl-phenyl)-1-indenyl]-zirconium dichloride
A-bis[2-[(1-methylcyclohexyl)methyl]-4-(4-trimethylsilyl-phenyl)-1-indenyl]-zirconium dichloride
A-bis[2-[(1-methylcyclopentyl)methyl]-4-(4-trimethylsilyl-phenyl)-1-indenyl]-zirconium dichloride
A-bis[2-[(1-methylcycloheptyl)methyl]-4-(4-trimethylsilyl-phenyl)-1-indenyl]-zirconium dichloride
A-bis[2-[(1-methylcyclononyl)methyl]-4-(4-trimethylsilyl-phenyl)-1-indenyl]-zirconium dichloride
A-bis[2-[(1-methylcyclooctyl)methyl]-4-(4-trimethylsilyl-phenyl)-1-indenyl]-zirconium dichloride
A-bis[2-[(1-ethylcyclohexyl)methyl]-4-(4-trimethylsilyl-phenyl)-1-indenyl]-zirconium dichloride
A-bis[2-[(1-ethylcyclopentyl)methyl]-4-(4-trimethylsilyl-phenyl)-1-indenyl]-zirconium dichloride
A-bis[2-[(1-ethylcycloheptyl)methyl]-4-(4-trimethylsilyl-phenyl)-1-indenyl]-zirconium dichloride
A-bis[2-[(1-ethylcydononyl)methyl]-4-(4-trimethylsilyl-phenyl)-1-indenyl]-zirconium dichloride
A-bis[2-[(1-ethylcyclooctyl)methyl]-4-(4-trimethylsilyl-phenyl)-1-indenyl)-zirconium dichloride
A-bis[2-[(1-ethylcyclobutyl)methyl]-4-(4-trimethylsilyl-phenyl)-1-indenyl]-zirconium dichloride
A-bis[2-[(1-propylcyclohexyl)methyl]-4-(4-trimethylsilyl-phenyl)-1-indenyl]-zirconium dichloride
A-bis[2-[(1-propylcyclopentyl)methyl]-4-(4-trimethylsilyl-phenyl)-1-indenyl]-zirconium dichloride
A-bis[2-[(1-propylcycloheptyl)methyl]-4-(4-trimethylsilyl-phenyl)-1-indenyl]-zirconium dichloride
A-bis[2-[(1-propylcyclononyl)methyl]-4-(4-trimethylsilyl-phenyl)-1-indenyl]-zirconium dichloride
A-bis[2-[(1-propyl-cyclooctyl)methyl]-4-(4-trimethylsilyl-phenyl)-1-indenyl]-zirconium dichloride
A-bis[2-[(1-propylcyclobutyl)methyl]-4-(4-trimethylsilyl-phenyl)-1-indenyl]-zirconium dichloride
A-bis[2-[(1-propylcyclopropyl)methyl]-4-(4-trimethylsilyl-phenyl)-1-indenyl]-zirconium dichloride
A-bis[2-[(1-methylcyclohexyl)methyl]-4-(4-ethyl-phenyl)-1-indenyl]-zirconium dichloride
A-bis[2-[(1-methylcyclopentyl)methyl]-4-(4-ethyl-phenyl)-1-indenyl]-zirconium dichloride
A-bis[2-[(1-methylcycloheptyl)methyl]-4-(4-ethyl-phenyl)-1-indenyl[-zirconium dichloride
A-bis[2-[(1-methylcyclononyl)methyl]-4-(4-ethyl-phenyl)-1-indenyl]-zirconium dichloride
A-bis[2-[(1-methylcyclooctyl)methyl]-4-(4-ethyl-phenyl)-1-indenyl]-zirconium dichloride
A-bis[2-[(1-ethylcyclohexyl)methyl]-4-(4-ethyl-phenyl)-1-indenyl]-zirconium dichloride
A-bis[2-[(1-ethylcyclopentyl)methyl]-4-(4-ethyl-phenyl)-1-indenyl]-zirconium dichloride
A-bis[2-[(1-ethylcycloheptyl)methyl]-4-(4-ethyl-phenyl)-1-indenyl]-zirconium dichloride
A-bis[2-[(1-ethylcyclononyl)methyl]-4-(4-ethyl-phenyl)-1-indenyl]-zirconium dichloride
A-bis[2-[(1-ethylcyclooctyl)methyl]-4-(4-ethyl-phenyl)-1-indenyl]-zirconium dichloride
A-bis[2-[(1-ethylcyclobutyl)methyl]-4-(4-ethyl-phenyl)-1-indenyl]-zirconium dichloride
A-bis[2-[(1-propylcyclohexyl)methyl]-4-(4-ethyl-phenyl)-1-indenyl]-zirconium dichloride
A-bis[2-[(1-propylcyclopentyl)methyl]-4-(4-ethyl-phenyl)-1-indenyl]-zirconium dichloride
A-bis[2-[1-propylcycloheptyl)methyl]-4-(4-ethyl-phenyl)-1-indenyl]-zirconium dichloride
A-bis[2-[(1-propylcyclononyl)methyl]-4-(4-ethyl-phenyl)-1-indenyl]-zirconium dichloride
A-bis[2-[(1-propylcyclooctyl)methyl]-4-(4-ethyl-phenyl)-1-indenyl]-zirconium dichloride
A-bis[2-[(1-propylcyclobutyl)methyl]-4-(4-ethyl-phenyl)-1-indenyl]-zirconium dichloride
A-bis[2-[(1-propylcyclopropyl)methyl]-4-(4-ethyl-phenyl)-1-indenyl]-zirconium dichloride
A-bis[2-[(5-methyl-1,3-dioxan-5-yl)methyl]-4-(tert-butylphenyl)-1-indenyl]-zirconium dichloride
A-bis [2-[(5-ethyl-1,3-dioxan-5-yl)methyl]-4-(tert-butylphenyl)-1-indenyl]-zirconium dichloride
A-bis[2-[(2,2,5-trimetyhl-1,3-dioxan-5-yl)methyl]-4-(tert-butylphenyl)-1-indenyl]-zirconium dichloride
A-bis[2-[(2,2,-dimetyhl-5-ethyl-1,3-dioxan-5-yl)methyl]-4-(tert-butylphenyl)-1-indenyl]-zirconium dichloride
A-bis[2-[(3-methyl-oxetan-3-yl)methyl]-4-(tert-butylphenyl)-1-indenyl]-zirconium dichloride
A-bis[2-[(3-ethyl-oxetan-3-yl)methyl]-4-(tert-butylphenyl)-1-indenyl]-zirconium dichloride
A-bis[2-[(1-methylcyclohex-3-en-1-yl)methyl]-4-(tert-butylphenyl)-1-indenyl]-zirconium dichloride
A-bis [2-[(1-ethylcyclohex-3-en-1-yl)methyl]-4-(tert-butylphenyl)-1-indenyl]-zirconium dichloride

A is Dimethylsilanediyl, Diethylsilanediyl, Dipropylsilanediyl, Dibutylsilanediyl, Dipentylsilanediyl, Dihexylsilanediyl, Diheptylsilanediyl, Dioctylsilanediyl, Dinonanylsilanediyl, Didecanylsilanediyl, Diundecanylsilanediyl, Didodecanylsilanediyl, Dimethylgermanediyl, Diethylgermanediyl, Dipropylgermanediyl, Dibutylgermanediyl, Dipentylgermanediyl, Dihexylgermanediyl, Diheptylgermanediyl, Dioctylgermanediyl, Dinonanylgermanediyl, Didecanylgermanediyl, Diundecanylgermanediyl or Didodecanylgermanediyl, Hexyl(methyl)germanediyl,Ethyl(methyl)germanediyl, Ethyl(methyl)silanediyl, Propyl(methyl)silanediyl, 3,3,3-trifluoropropyl(methyl)silanediyl, Propyl(ethyl)silanediyl, Butyl(methyl)silanediyl, Butyl(ethyl)silanediyl, Butyl(propyl)silanediyl, Pentyl(methyl)silanediyl, Pentyl(ethyl)silanediyl, Pentyl(propyl)silanediyl, Pentyl(butyl)silanediyl, Hexyl(methyl)silanediyl, Hexyl(ethyl)silanediyl or Hexyl(propyl)silanediyl, Hexyl(butyl)silanediyl or Hexyl(pentyl)silanediyl, such that the list of bridge elements A is to be understood in such a way that the naming of the substituents on the bridge atom is meant also to include all structural isomers as though they were explicitly named. For example, dibutylsilanediyl simultaneously includes di(n-butyl)silanediyl, di(sec-butyl)silanediyl, di(tert-butyl)silanediyl, or mixtures of these structural isomers. Similarly, the naming of dipentylsilanediyl also includes, for example, di(cyclopentyl)silanediyl or the naming of hexyl(methyl)silanediyl also includes, for example, cyclohexyl(methyl)silanediyl.

Supported Metallocene Complexes and Polymerization Process

The metallocene complexes produced according to embodiments disclosed herein, including recovered and recycled ligand, may be used to produce a catalyst system comprising at least one metallocene complex, at least one cocatalyst and optionally one support. The catalyst systems may be used for the polymerization of olefins. A variety of different processes for preparing supported catalysts and processes using these catalyst systems for the polymerization of olefins are known, such as described in WO 94/28034, WO 94/14856, WO 98/01481, WO 00/05277, WO 09/054832 and WO 10/077230 and US Patent Nos. 7,285,608, 7,232,869, 7,169,864, among the numerous others mentioned above and are herewith incorporated by reference.

**EXAMPLES**

**General**

The preparation and handling of the organometallic compounds were carried out in an atmosphere of dry nitrogen using Schlenk techniques or in a glove box. All solvents were purged with nitrogen and dried over molecular sieves before use.

Organic and organometallic compounds were characterized using 1H-NMR spectroscopy and gas chromatography. Due to the presence of a mixture of isomers in the recycled ligands the 1H-NMR spectra of the ligands showed a multitude of overlapping signals originating from the different species and made the detailed interpretation of the spectra very complex. As consequence, for the purpose of this work for identification and purity determinations of the respective compounds gas chromatograpy was used. For the compound identification, samples of the respective pure ligands were used.

The gas chromatograph used was an Agilent 7890A with autosampler and a J&W HP-5 or as alternative a J&W DB-1ht column.

The polymers produced were characterized by DSC and MFR analysis.

The following abbreviations are employed:
GC = gas chromatography.
MFR = melt flow rate, measured at 230 °C with a load of 2.16 kg (ISO 1133).
Tm = polymer melting point in °C, determined by differential scanning calorimetry (DSC, ISO 3146) with a 1st heating/cooling/2nd heating rate of 20 °C/min.

Example A: Recovery of free ligand from dimethylsilanediyl-bis-(2-((1-methylcyclohexyl)methyl)-4-(4'-tert-butylphenyl)-indenyl)zirconium dichloride

In a three necked round bottom flask equipped with a reflux condenser, a dropping funnel and a thermometer, 14.57 g of the metallocene dimethylsilanediyl-bis-(2-((1-methylcyclohexyl)methyl)-4-(4'-tert-butylphenyl)-indenyl)zirconium dichloride were mixed with 145 ml of toluene and 14.6 ml of ethanol were added. The resulting suspension was warmed to 78°C by means of an oil bath. With the temperature rising, gradually a clear, orange-red solution formed. Stirring at 78°C was continued for 2h. During this period, the deep orange-red color of the solution gradually changed to almost colorless. The latter indicated that the decomposition of the complex was complete. For workup, 365 g of ethanol were added to the mixture via the dropping funnel and an ethanol / toluene azeotrope (theoretical composition: 68 %ethanol, 32 %toluene, boiling temperature 76.7°C) was distilled off. After 319 g of the azeotrope were removed, another 365 g of ethanol were added and distillation was continued until a total volume of approximately 200 ml remained in the reaction flask. 365 g of methanol were added to the reaction mixture with stirring at such a rate that a slight boiling under reflux of the mixture was maintained. The resulting mixture had a slightly hazy appearance and stirring at the final temperature (about 64.7°C = boiling point of methanol) was continued for approximately 5 to 10 minutes. After that period, the stirrer was stopped and the mixture was left to cool to room temperature. A colorless precipitate formed and subsequently was filtered off, washed with a small portion of methanol and dried in a vacuum at 60°C.

9.28 g of ligand as a mixture of isomers and with a purity of at least 94 % were recovered. The yield corresponds to 76.6 % of the theoretical maximum recoverable amount. According to GC data, the mother liquer contains more ligand which can, at least partially, be recovered by cooling the mother liquor to -20°C of night and subsequent filtering of the precipitate.

Example B: Recovery of free ligand from cyclohexyl(methyl)silanediylbis(2-methyl-4-(4'-*tert*-butyl-phenyl)indenyl)zirconium dichloride

10.0 g of metallocene cyclohexyl(methyl)silanediylbis(2-methyl-4-(4'-tert-butylphenyl)indenyl)zirconium dichloride were dissolved in 100 ml of dichloromethane and 100 ml of 10 % aqueous HCI and 10 ml of ethanol were added. The resulting biphasic mixture was stirred overnight at room temperature. During this period, the deep orange-red color of the organic phase gradually changed to a bright yellow color. The aqueous phase remained colorless. In both phases no precipitate was visible. The phases were separated and the aqueous phase was extracted with 20 ml of dichloromethane. The combined organic phases were dried over magnesium sulfate and the solvent was removed in a vacuum.

Yield: 6.90 g (86.1 % of maximum recoverable amount) of crude cyclohexyl(methyl)silanediylbis(2-methyl-4-(4'-tert-butyl-phenyl)indene) as a mixture of isomers. According to GC analysis the crude product had a purity of > 85% (determined by GC). The crude product can be recrystallized from hot alcohols such as ethanol or isopropanol and a purity of the ligand of > 95 % (determined by GC) can be achieved.

Example C: Recovery of free ligand from dimethylsilanediyl-bis-(2-methyl-4,5-benzoindenyl)zirconium dichloride

A three necked round bottom flask equipped with a reflux condenser, a dropping funnel and a thermometer was charged with 13.4 g of metallocene dimethylsilanediyl-bis-(2-methyl-4,5-benzoindenyl)zirconium dichloride, 135 ml of toluene, and 13.5 ml of ethanol. The resulting suspension was warmed to an internal temperature of 90°C and was kept at this temperature for 1 hour. After stirring the mixture for some time at elevated temperature, a clear orange solution formed. Subsequently, 13.4 ml of ethanol were added to the reaction mixture, the internal temperature was lowered to 80°C and stirring was continued for another 3 hours. During this time, the color of the reaction mixture gradually changed from the initial bright orange to a deep red. After cooling to room temperature, the organic phase was washed twice with 150 ml of 10% HCl and once with 150 ml of demineralized water. The organic phase containing the corresponding free ligand in a purity >85% (According to GC, solvent not taken into account) was separated and dried over magnesium sulfate and the solvent was removed in a vacuum. The resulting oily residue still contained some toluene and was subsequently dissolved in 20 ml of hot ethanol until a clear, slightly red solution formed and the mixture was left to crystallize at - 18°C for 60 hours. After filtration, the filter cake was washed twice with small portions of cold ethanol and was subsequently dried in a vacuum at elevated temperatures.

3.06 g (31.7 % of maximum recoverable amount) of dimethylsilanediyl-bis-(2-methyl-4,5-benzoindene) were recovered as a mixture of isomers in a purity of 91 % (determined by GC). More of the ligand can be obtained by a sequence of concentrating and cooling of the mother liquor or by replacing the mother liquor with other alcohols, such as methanol or ethanol.

Example D: Recovery of free ligand from dimethylsilandiyl-bis-(2-(cyclohexylmethyl)-4-(4'-tert-butylphenyl)-1-indenyl)-zirconium dichloride

11.0 g of metallocene dimethylsilandiyl-bis-(2-(cyclohexylmethyl)-4-(4'-tert-butylphenyl)-1-indenyl)-zirconium dichloride were dissolved in 100 ml of dichloromethane and 100 ml of 10 % aqueous HCI and 1 ml of ethanol were added. The resulting mixture was stirred overnight at room temperature. During this period, the deep orange-red color of the organic phase gradually changed to a bright yellow color. The aqueous phase remained colorless. In both phases no precipitate was visible. The phases were separated and the organic phase was extracted with a small amount of dichloromethane. The unified organic phases were dried over magnesium sulfate and the solvent was removed in a vacuum.

Yield: 7.70 g of (85 % of maximum recoverable amount) crude dimethylsilandiyl-bis-(2-(cyclohexylmethyl)-4-(4'-tert-butylphenyl)-1-indene) were recovered as a mixture of isomers and in a purity of >90 % (determined by GC). The crude product can be recrystallized from hot alcohols such as ethanol or isopropanol and a purity of the ligand of > 95 % (determined by GC) can be achieved.

Synthesis of metallocene complexes

Example E: Synthesis of dimethylsilanediyl-bis-(2-((1-methylcyclohexyl)methyl)-4-(4'-tert-butylphenyl)-indenyl)zirconium dichloride

To 5.0 g (6.41 mmol, 1:1 mixture of recycled and fresh ligand) of bis[4-(4-tert-butylphenyl)-2-[(1-methyl-cyclohexyl)methyl]-1H-inden-1-yl]-dimethylsilane were added 50 ml of dry diethyl ether in a 100 ml round bottom flask. Approx. 20 minutes after adding 5.3 ml of n-butyllithium (2.5 M in toluene, 2.05 eq.) at room temperature the initial suspension transformed into a clear orange solution. The mixture was stirred over night at this temperature and then was cooled to 0°C. 1.51 g (1 eq.) of zirconium tetrachloride were added and after warming to room temperature stirring was continued for 5 h. The crude reaction mixture was filtered over a G4 frit and the residue was washed twice with 6 ml of diethyl ether. The filter cake was extracted once with 16 ml, once with 10, once with 8 and once with 6 ml of hot toluene. From the filtrate 1. 50 g of the metallocene with a rac/meso-ratio of 5:1 were obtained. For further r/m enrichment the product was recrystallized from toluene. ¹H-NMR (500 MHz, CDCl₃, ppm): δ = 7.61 (m, 2 H, aromatic), 7.53 (m, 4H, aromatic), 7.40 (m, 2 + 4H, aromatic), 7.33 (m, 2H, aromatic), 7.05 (m, 2H, aromatic), 6.91 (s, 2H, indenyl-H), 2.65 and 2.23 (2 x "d", 2 x 2H, indenyl-C*H₂*), 1.48 - 1.08 (multiple m's, 20 H, ring), 1.35 (s, 6H, C*H*_{3Si}), 1.32 (s, 18H, C(C*H*₃)₃), 0.75 (s, 6H, C*H*₃).

Example F: Synthesis of cyclohexyl(methyl)silanediylbis(2-methyl-4-(4'-*tert*-butylphenyl)indenyl)zirconium dichloride

10.0 g (15.3 mmoles) of cyclohexyl(methyl)silanediylbis(2-methyl-4-(4'-*tert-*butylphenyl)indene) are introduced into 100 mL of diethyl ether, and 12.3 mL of an *n-*butyllithium solution (2.5 *M* in toluene) are added at room temperature. After this addition is complete, the mixture is stirred overnight at this temperature. It is cooled to 0°C, and then 3.59 g (15.3 mmoles) of zirconium tetrachloride are added in portions. The solution is stirred for two hours at room temperature. The precipitate that forms is separated by filtration through a G3 fritted glass filter and washed twice with 10 mL of diethyl ether. The residue containing the desired product and LiCl is then dried in an oil-pump vacuum. Treatment of the crude product with methylene chloride, filtration and subsequent removal of the solvent yields 6.65 g of the metallocene complex with a rac:meso ratio > 20:1. ¹H-NMR (400 MHz, CDCl₃, ppm): 7.40-6.97 (m, 16H, arom-H), 2.22 (s, 6H, CH₃), 2.19-1.46 (m, 11 H, aliph-H), 1.32 (s, 18H, *tert*-butyl), 1.27 (s, 3H, CH₃).

Example G: Synthesis of dimethylsilanediyl-bis-(2-methyl-4,5-benzoindenyl)zirconium dichloride

A solution of 7.0 g (16.8 mmoles, 1:1 mixture of recycled and fresh ligand) of dimethylbis(2-methyl-4,5-benzo-indenyl)silane in 70 mL of tetrahydrofuran is treated with 13.5 mL of an *n*-butyllithium solution (2.5 *M* in toluene) and stirred for 16 hours at room temperature. The reaction solution is cooled to 0°C and 3.92 g (16.8 mmoles) of zirconium tetrachloride are added in portions. After this addition, the solution is warmed to room temperature and stirred for two hours at this temperature. The precipitate that forms is filtered through a G3 fritted glass filter and the residue is washed once with 12 mL of diethyl ether. The residue is then dried in a vacuum, and the desired product is obtained in a yield of 5.6 g with a rac:meso ratio of about 1:1. The isomers must be separated in a subsequent step to obtain selective catalysts for propylene polymerization. ¹H-NMR (400 MHz, CDCl₃, ppm): 7.85-7.10 (m, 14H, arom-H), 2.25 (s, 6H, CH₃), 1.30 (s, 6 H, CH₃).

Example H: Synthesis of dimethylsilandiyl-bis-(2-(cyclohexylmethyl)-4-(4'-tert-butylphenyl)-1-indenyl)-zirconium dichloride

10.0 g (13.4 mmol) dimethylbis-(2-(cyclohexylmethyl)-4-(4'-tert-butylphenyl)-1-indenyl)silane were dissolved in 100 ml of diethyl ether. 10.8 ml of n-butyl lithium (2.5 M in toluene) were added at room temperature and the mixture was stirred overnight at room temperature. Then 3.13 g (13.4 mmol) zirconium tetrachloride were added in portions. The orange - yellow suspension was stirred for 5 h at room temperature and the solid was isolated by filtration. Washing with 2 portions of 15 ml diethyl ether each and drying in vacuo yielded crude complex (rac/meso = 1.5:1) still containing lithium chloride. The racemic complex was isolated by fractional crystallization from toluene. Yield: 4.1 g (33 %) as a bright yellow powder. ¹H-NMR (400 MHz, CDCl₃): δ = 7.61 (d, 2H, aromatic), 7.57, 7.44 (2 x d, 8H, aromatic), 7.36 (d, 2H, aromatic), 7.22, 7.15, 7.07 (3 x m, 10H, aromatic + toluene), 6.94 (s, 2H, indenyl-H), 2.64 ("dd", 2H, indenyl-C*H₂*), 2.34 (s, toluene) 2.13 ("dd", 2H, indenyl-C*H₂*), 1.75 - 1.45 (m, 10H, aliphatic), 1.33 (s, 18H, C(C*H₃*)₃), 1.31 (s, 6H, Si(C*H₃*)₂), 1.12 - 0.76 (m, 12H, aliphatic) ppm.

Example Ia : Preparation of methylaluminoxane treated silica

To a stirred suspension of 30.0 g of silica (Grace XPO2107, dried at 180°C and 1 mbar for 16 hours, LOD < 0.5 wt% and LOI = 2.6 wt%) in 150 mL of toluene is added slowly 76 mL of a 30 wt-% solution of methylaluminoxane in toluene (Albemarle Corporation) at room temperature. During the addition the temperature must not exceed 30°C. After the addition is complete, the mixture is stirred for half an hour at room temperature and then heated and allowed to reflux for four hours. After cooling down to room temperature the solvent is separated by filtration. The residue is washed with two 150 mL portions of toluene and three 150 mL portions of isohexane and dried in vacuum to constant weight. The methylaluminoxane treated silica is obtained as a free-flowing powder in a yield of 48.8 g.

Example Ib: Preparation of methylaluminoxane treated silica

To a stirred suspension of 30 g of silica (Grace XPO2107, dried at 180°C and 1 mbar for 16 hours, LOD < 0.5 wt% and LOI = 2.6 wt%) in 154 mL of toluene is added slowly 31 mL of a 30 wt-% solution of methylaluminoxane in toluene (Albemarle Corporation) at room temperature. During the addition the temperature must not exceed 30°C. After the addition is complete, the mixture is stirred for two hours at room temperature and separated by filtration. The residue is washed with two 154 mL portions of toluene and three 154 mL portions of isohexane and dried in vacuum to constant weight. The methylaluminoxane treated silica is obtained as a free-flowing powder in a yield of 42 g.

Example J: Preparation of a supported metallocene catalyst with rac-dimethylsilanediyl-bis-(2-((1-methylcyclohexyl)methyl)-4-(4'-tert-butylphenyl)-indenyl)zirconium dichloride

10.0 g of the methylaluminoxane treated silica prepared in example Ib are placed in a fritted glass filter as a column with a smooth surface. A minimal amount of toluene is added and the treated silica is carefully stirred with a spatula to remove any air pockets in the column. The excess toluene is removed by filtration leaving a smooth surface. In a separate flask 336 mg of rac- dimethylsilanediyl-bis-(2-((1-methylcyclohexyl)methyl)-4-(4'-tert-butylphenyl)-indenyl)zirconium dichloride (prepared in example E) are mixed with 27 mL of toluene and 13.6 mL of a 30 wt-% solution of methylaluminoxane in toluene (Albemarle Corporation). The slurry is stirred at room temperature for one hour to give an orange solution. This solution is then carefully added on top of the methylaluminoxane treated silica and slowly filtered off within approximately 30 minutes. When the surface of the colored solution reaches the top of the silica, the filtration process is stopped and the filter cake is carefully and thoroughly stirred by means of a spatula. The catalyst is then allowed to rest for one hour. The residual solvent is filtered off and the catalyst is washed twice with isohexane (20 mL) and dried in a nitrogen purge to constant weight. The catalyst is obtained as free-flowing orange powder in a yield of 11.6 g.

Example K: Preparation of a supported metallocene catalyst with rac-cyclohexyl(methyl)silanediylbis(2-methyl-4-(4'-*tert*-butyl-phenyl)indenyl)zirconium dichloride

10.0 g of the methylaluminoxane treated silica prepared in Example Ia are placed in a fritted glass filter as a column with a smooth surface. In a separate flask 252 mg of rac-cyclohexyl(methyl)silanediylbis(2-methyl-4-(4'-*tert*-butyl-phenyl)indenyl)zirconium dichloride (prepared in example F) are mixed with 25.2 mL of toluene and 2.9 mL of a 30 wt-% solution of methylaluminoxane in toluene (Albemarle Corporation). The slurry is stirred at room temperature for one hour to give a deeply colored solution. This solution is carefully added on top of the methylaluminoxane treated silica and slowly filtered off within approximately 30 minutes. When the surface of the colored solution reaches the top of the silica, the filtration process is stopped and the filter cake is carefully and thoroughly stirred by means of a spatula. The catalyst is then allowed to rest for one hour. The residual solvent is filtered off and the catalyst is dried to constant weight in a stream of nitrogen. The catalyst is obtained as free-flowing powder in a yield of 11.4 g.

Example L: Preparation of a supported metallocene catalyst with rac-dimethylsilanediyl-bis-(2-methyl-4,5-benzoindenyl)zirconium dichloride

10.0 g of the methylaluminoxane treated silica prepared in Example Ia are placed in a fritted glass filter as a column with a smooth surface. In a separate flask 179 mg of rac-dimethylsilanediylbis(2-methyl-4,5-benzoindenyl)zirconium dichloride (prepared in example G) are mixed with 25 mL of toluene and 2.8 mL of a 30 wt-% solution of methylaluminoxane in toluene (Albemarle Corporation). The slurry is stirred at room temperature for one hour to give a deeply red solution. This solution is then carefully added on top of the methylaluminoxane treated silica and slowly filtered off within approximately 30 minutes. When the surface of the colored solution reaches the top of the silica, the filtration process is stopped and the filter cake is carefully and thoroughly stirred by means of a spatula. The catalyst is then allowed to rest for one hour. The residual solvent is filtered off and the catalyst is dried in a nitrogen purge to constant weight. The catalyst is obtained as free-flowing powder in a yield of 9.6 g.

Example M: Preparation of a supported metallocene catalyst with rac-dimethylsilandiyl-bis-(2-(cyclohexylmethyl)-4-(4'-tert-butylphenyl)indenyl)-zirconium dichloride

10.0 g of the methylaluminoxane treated silica prepared in Example Ib are placed in a fritted glass filter as a column with a smooth surface. A minimal amount of toluene is added and the treated silica is carefully stirred with a spatula to remove any air pockets in the column. The excess toluene is removed by filtration leaving a smooth surface. In a separate flask 326 mg of *rac*-dimethylsilanediyl-bis-(2-(cyclohexylmethyl)-4-(4'-*tert*-butyl-phenyl)-1-indenyl)-zirconium dichloride (prepared in Example H) are mixed with 27 mL of toluene and 13.6 mL of a 30 wt-% solution of methylaluminoxane in toluene (Albemarle Corporation). The slurry is stirred at room temperature for one hour to give an orange solution. This solution is then carefully added on top of the methylaluminoxane treated silica and slowly filtered off within approximately 30 minutes. When the surface of the colored solution reaches the top of the silica, the filtration process is stopped and the filter cake is carefully and thoroughly stirred by means of a spatula. The catalyst is then allowed to rest for one hour. The residual solvent is filtered off and the catalyst is washed twice with isohexane (20 mL) and dried in a nitrogen purge to constant weight. The catalyst is obtained as free-flowing reddish powder in a yield of 12.0 g.

Comparative example N:

A catalyst was prepared according to the procedure of example J. The metallocene used rac-dimethylsilanediyl-bis-(2-((1-methylcyclohexyl)methyl)-4-(4'-tert-butylphenyl)-indenyl)zirconium dichloride was prepared according to the procedure given in example E using only non-recycled ligand.

Comparative example O:

A catalyst was prepared according to the procedure of example K. The metallocene used rac-cyclohexyl(methyl)silanediylbis(2-methyl-4-(4'-*tert*-butyl-phenyl)indenyl)zirconium dichloride was prepared according to the procedure given in example F using only non-recycled ligand.

Comparative example P:

A catalyst was prepared according to the procedure of example L. The metallocene used rac-dimethylsilanediyl-bis-(2-methyl-4,5-benzoindenyl)zirconium dichloride was prepared according to the procedure given in example G using only non-recycled ligand.

Comparative example Q:

A catalyst was prepared according to the procedure of example M. The metallocene used rac-dimethylsilandiyl-bis-(2-(cyclohexylmethyl)-4-(4'-tert-butylphenyl)indenyl)-zirconium dichloride was prepared according to the procedure given in example H using only non-recycled ligand.

Test polymerizations

Test polymerizations were carried out with the catalysts prepared in examples J - Q according to the following procedure:

A dry and nitrogen purged 5 dm³ autoclave equipped with a helical stirrer is charged with if desired 100 g of metallocene polymer seed bed, 1 cm³ of triisobutylaluminum (10 wt.-% solution in heptane), 24.3 mmole hydrogen and 1500 cm³ of liquid propylene. The mixture is stirred for at least 5 minutes (stirrer speed 200 rpm) at 20 °C. Then about 40-70 mg of supported metallocene catalyst, suspended in 5 cm³ of white oil, are injected with 1500 cm³ of liquid propylene. The reactor is heated to an internal temperature of 65 °C within 11 minutes. The polymerization reaction is allowed to proceed at 65 °C for 60 minutes. The polymerization is stopped by releasing the monomer and cooling down the reactor. The polymer is discharged and dried.

Results: The polymerization results are summarized in table 1. According to the results obtained, catalyst productivity and polymer properties are virtually identical for a catalyst prepared with a given metallocene which was synthesized with a mixture of fresh and recycled ligand and for the corresponding catalyst prepared with the same metallocene which was synthesized using only fresh ligand.

| Polymerization with catalyst from example | Productivity [g polymer / g catalyst*hour] | Tm [deg C] | MFR 2.16 [g/10'] |
|---|---|---|---|
| J | 28.000 | 153 | 14 |
| Corresponding Comparative Example N | 28.500 | 154 | 16 |
| K | 22.000 | 152 | 3.5 |
| Corresponding Comparative Example O | 21.000 | 152 | 3.0 |
| L | 17.500 | 145 | 62 |
| Corresponding Comparative Example P | 18.500 | 145 | 58 |
| M | 19.900 | 151 | 11 |
| Corresponding Comparative Example Q | 21.000 | 152 | 13 |

The results obtained for test the polymerizations with catalyst, which were made with metallocene complexes synthesized at least in part from recycled ligand material demonstrate that there is no difference to catalyst made exclusively from metallocene prepared from fresh ligand. The small differences in activity and polymer properties in the above table are within the usual experimental error. Variations observed for repeated polymerizations with the same catalyst are on the same magnitude.

As described above, processes disclosed herein may be used for the efficient and economical recovery of ligand from a metallocene complex. Decomposition of the metallocene complex using a protic compound to form a reaction product comprising free ligand may advantageously improve yield of the free ligand from metallocene complexes via decomposition under mild conditions. Processes disclosed herein may additionally or alternatively include one or more of the following advantages: increasing yield of a desired metallocene complex or metallocene catalyst on a per ligand basis; improve the economics for metallocene production; and/or the economic viability to produce metallocenes typically not manufactured due to excessive cost of the ligand.

For example, in prior processes, typically 50% or more of the total metallocene yield is lost to separation and disposal of the unwanted diastereomer. Further, a large part of the cost to produce the metallocene complexes may be attributed to the synthesis of the ligands used during synthesis of the metallocene complex. Recovery and reuse of ligand according to embodiments disclosed herein may thus reduce costs for ligand production, and may reduce the amount of materials disposed (e.g., decreased ligand disposal), thus significantly improving economics of the metallocene synthesis process. Processes disclosed herein provide an efficient manner to regenerate portions of the raw materials used in metallocene manufacture, and are capable of recovering large amounts of the ligand which would otherwise be lost during the manufacturing process as a consequence of the formation of multiple metallocene diastereomers.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for recovering a ligand from a metallocene complex, the process comprising:
contacting a metallocene complex comprising a ligand with a protic composition under reaction conditions to decompose the metallocene complex and form a reaction product comprising free ligand and inorganic decomposition products;
recovering the free ligand from the reaction product.

2. The process of claim 1, further comprising feeding at least a portion of the recovered free ligand to a process for the production of an ansa-metallocene complex comprising a meso form of the metallocene complex and a racemic form of the metallocene complex.

3. The process of claim 2, further comprising separating the ansa-metallocene complex to recover a fraction comprising the meso form of the metallocene complex and a fraction comprising the racemic form of the metallocene complex.

4. The process of claim 3, further comprising at least one of:
supporting the racemic form of the metallocene complex;
activating the racemic form of the metallocene complex; and
feeding the racemic form of the metallocene complex to a polymerization process.

5. The process of claim 3, further comprising feeding at least a portion of the fraction comprising the meso form of the metallocene complex to the contacting step.

6. A process for producing a metallocene catalyst, the process comprising:
synthesizing an ansa-metallocene complex comprising a mixture of the racemic form of the metallocene complex and the meso form of the metallocene complex, the synthesizing including reaction of a ligand with a metal compound;
separating the ansa-metallocene complex to recover a fraction comprising the meso form of the metallocene complex and a fraction comprising the racemic form of the metallocene complex;
contacting at least a portion of the fraction comprising the meso form of the metallocene complex with a protic composition under reaction conditions to decompose the metallocene complex and form a reaction product comprising free ligand and inorganic decomposition products;
recovering the free ligand from the reaction product; and
recycling at least a portion of the recovered free ligand to the synthesizing step.

7. The process of claim 6, further comprising forming a metallocene catalyst system including one or more of the following steps:
supporting the racemic form of the metallocene complex;
activating the racemic form of the metallocene complex; and
contacting the racemic form of the metallocene complex with a co-catalysts.

8. The process of claim 6 or claim 7, further comprising purifying the recovered free ligand prior to recycling to the synthesizing step.

9. The process of any one of claims 1 to 8, wherein the protic composition comprises a protic substance comprising at least one of water, a mineral acid, an organic acid, an alcohol, an ammonium salt containing at least one nitrogen-bound hydrogen atom, a solfonic acid, a sulfinic acid, a thiol, an organic derivative of oxoacid and phosphorous, and combinations thereof.

10. The process of any one of claims 1 to 9, wherein the protic composition is a homophasic mixture of one or more protic substances or a homophasic mixture of one or more protic substances and one or more aprotic substances.

11. The process of any one of claims 1 to 9, wherein the protic composition is a multiphasic system containing one or more protic substances and one or more aprotic substances.

12. The process of claim 10 or claim 11, wherein the aprotic substance comprises at least one of toluene, methylene chloride, a linear hydrocarbon, a branched hydrocarbon, and combinations thereof.

13. The process of any one of claims 1 to 12, wherein the decomposition reaction conditions include a temperature in the range from 50°C to 100°C.

14. The process of any one of claims 1 to 13, wherein the protic composition comprises a) an aprotic substance suitable for dissolving the metallocene complex, and b) a protic substance comprising one or more alcohols.

15. The process of claim 14, wherein the decomposition reaction is performed at a boiling point of the mixture under reflux.
